# EUROPEAN PATENT SPECIFICATION

(11) **EP 1 691 506 B1**
(45) Date of publication and mention of the grant of the patent: **05.08.2015**
(21) Application number: 04738269.2
(22) Date of filing: 22.06.2004
(51) Int. Cl.: H04L 12/18

(54) **A METHOD OF IMPLEMENTING MULTI-PARTY CONFERENCE SERVICE IN CARRYING AND CONTROLLING SEPARATE NETWORKS**
VERFAHREN ZUM IMPLEMENTIEREN EINES MEHRTEILNEHMER-KONFERENZDIENSTES BEIM FÜHREN UND STEUERN GETRENNTER NETZWERKE
PROCEDE POUR METTRE EN PLACE UNE CONFERENCE COLLECTIVE PERMETTANT DE PRENDRE EN CHARGE ET DE COMMANDER DES RESEAUX SEPARES

(30) Priority: 10.11.2003 CN 200310113424
(43) Date of publication of application: 16.08.2006
(73) Proprietor: ZTE Corporation, 518057 Shenzhen City, Guangdong Province (CN)
(72) Inventor: SHI, Song, ZTE Corporation, Nanshan District, 510857 Shenzhen (CN); ZHANG, Yinhua, ZTE corporation, Nanshan District, 510857 Shenzhen (CN)
(74) Representative: Schröer, Gernot H.
(86) International application number: PCT/CN2004/000671
(87) International publication number: WO 2005/046124

(56) References cited:
- WO-A-02/28047
- WO-A1-02/45427
- CN-A- 1 411 278
- CN-C- 1 103 160
- MADHUBABU BRAHMANAPALLY SYNDEO CORPORTION PREREPA VISWANADHAM MARCONI KRISHNA GUNDAMARAJU ADC TELECOMMUNICATIONS: "Megaco/H.248 Call flow examples; draft-ietf-megaco-callflows-02 .txt" IETF STANDARD-WORKING-DRAFT, INTERNET ENGINEERING TASK FORCE, IETF, CH, vol. megaco, no. 2, 1 June 2003 (2003-06-01), XP015022806 ISSN: 0000-0004
- "Gateway control protocol: Version 2; H.248.1 (05/02)" ITU-T STANDARD IN FORCE (I), INTERNATIONAL TELECOMMUNICATION UNION, GENEVA, CH, no. H.248.1 (05/02), 22 May 2002 (2002-05-22), XP017401372

## Description

### Technical Field

The present invention relates to a method for realizing multi-party conference service in telecommunication service, particularly relates to a method for realizing various service flowcharts of multi-party conference on Mc interface between MSC SERVER and MGW (Media Gateway) in separated NGN telecommunication network system.

### Technical Background

The next generation network, i.e. NGN (Next Generation Network), is an integrated and full-opened network architecture which can provide such services as voice, data, multimedia simultaneously, for example, WCDMA/ CDMA2000/ TD-SCDMA/ SOFRSWITCH etc.. NGN not only can realize the amalgamation of network, but most importantly, it can also realize the amalgamation of services by employing layered network architecture, standard protocol interface and packet network system based on uniform protocol.

The next generation MSC (Mobile Switch Center) based on packet switch technique is referred comparative to the conventional circuit switch, that is, it divides the conventional switch equipments into parts of call control and media process.

Under the frame of 3GPP R4, the most outstanding change of network architecture in R4 standards is in realizing the separation of Control Plane and User Plane in circuit domain of a core network, and introducing the definition of soft switch, which is mainly for separating the original MSC into MSC Server and MGW (Media Gateway) in the circuit domain, in which MSC Server is used to process signaling, MGW is used to process user data, therefore realizing the separation of Control Plane and User Plane. The object of separation is to make service independent from network, so as to realize the control and providing of service flexibly and effiiciently. The user and carrier can configure and define service characters by themselves, without caring for the type of network carrying service and the type of terminal. This makes the providing of service and application more flexible, and enables different network entities exert their best effect.

MSC server mainly includes the functions of call control and mobility management control. As the interface between network and mobile terminal, MSC server accomplishes the conversion between radio interface high level signaling and Nc interface, and performs control function on MGW via Mc interface.

MGW includes carrying terminal and media operation equipment (such as code converter, echo canceller etc.). It can perform media conversion and frame protocol conversion. In related standards (such as H.248, MGCP), media gateway (MGW) is defined to convert one media format in one network to another media format required by another network. For example, media gateway can perform conversion between carrying channel of circuit switch network and media stream of packet network, and can process audio, video or T.120, and process any combination of them, and can perform full duplex media translation, and can display video/audio message, realize other IVR functions, and can perform media conference, etc..

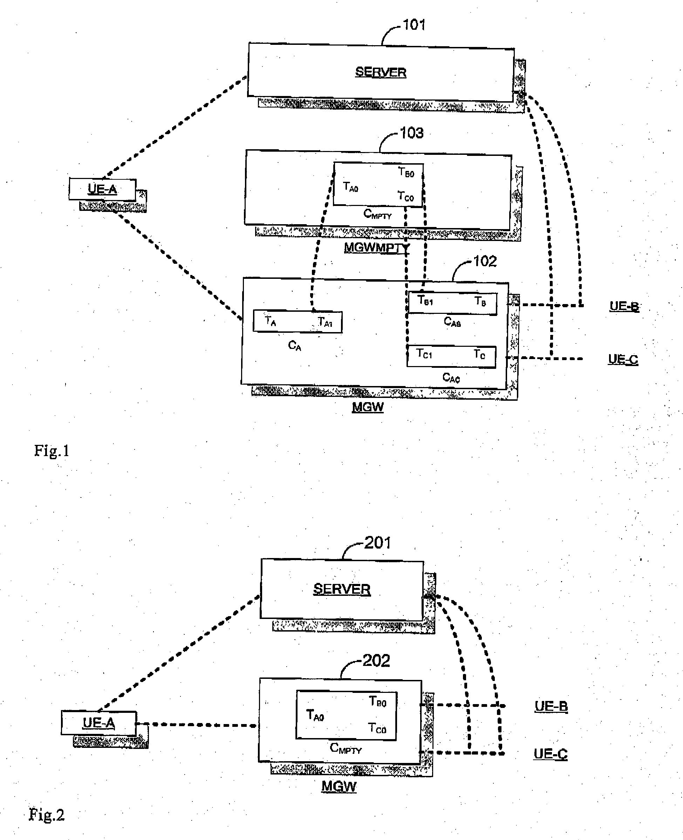

Mc interface between MSC server and MGW is based on H.248 protocol, and some expanding of 3GPP definition is added. That is to say, H.248 protocol is used by 3GPP/3GPP2 etc., as the protocol standard for the separation of Control Plane and User Plane of NGN network, which is mainly used for the gateway control between MGC and MGW and the establishment control of carrying. MGC and MGW communicate through H.248, in which the message can encode by selecting text form or binary form. The length of H.248 message is commonly between 100 to 300 bytes. The message format without being encoded is shown in fig.1, the message of H.248 is composed of Transaction/ Action/Command from outside to inside in order:

Transaction; Transaction is composed of several actions, and has integrality, wherein, the actions and commands in a same transaction need to be performed in order.

Action: Action is composed of several commands, and commonly has a detailed meaning; in special situation, one action is made up by one command. The action is actually the identification of a group of commands.

Command: Command is the basic unit for MGC and MGW realizing interchanges of message, and includes various command parameters. The operation objects of command is context which is distinguished by the context ID. The context is corresponding to calling, being used for maintaining the state of termination participating in the calling.

When a mobile user activates the multi-party conference, the MSC Server will select a MGW supporting multi-party conference bridge. If the MGW used by basic call does not support multi-party conference bridge, the MGW selected by MSC Server for supporting multi-party bridge is different from the MGW used by basic call, the network model I is shown in fig.1. If the MGW used by basic call supports multi-party conference bridge, the network model II is shown in fig.2. The mobile user UE-A initiating the multi-party conference is the dispatcher of this multi-party conference.

When the dispatcher requests holding the multi-party conference, the MSC Server will request MGW terminating the connection of access terminal and multi-party conference bridge.

When the dispatcher requests restoring the held multi-party conference, MSC Server will request MGW re-establishing the connection of access terminal and multi-party conference bridge.

When the dispatcher requests separating a remote call from the multi-party conference, MSC Server will requests MGW terminating the connection of access terminal and multi-party conference bridge, and at the same time separating the terminal for connecting remote user and multi-party conference bridge, and connecting access terminal and terminal of remote user separated from the connection.

Because the establishment of multi-party conference has two kinds of network models, when releasing the multi-party conference, there are also two kinds of network models.

The Megaco/H.248 call flow examples draft published 01.06.2003 by ADC Telecommunications illustrates the usage of Megaco - Version 1 protocol defined between the Media Gateway Controller and Media Gateway, including the conferencing flow in PSTN, which allows a user to speak with multiple users at the same time.

The document WO02/28047A2 discloses a generic call server and method of converting signaling protocols that utilizes a Generic Call-control State Machine (GCSM) for handling call-control signaling between a plurality of different signaling systems. The GCSM herein involves a Multi-Party state.

Although the object for MSC Server controlling the multi-party conference resource on MGW is same, in the actual embodiment, different methods can be employed. As for the Mc interface, different realizing methods result in different time sequences of message on Mc interface. The difference of message time sequence further influences the standardization of Mc interface. Therefore, how to provide a realizing flowchart of multi-party conference service employed in a network with NGN network Architecture has become a desiderated problem in the industry.

### Summay of the Invention

The problem to be solved by the present invention is to provide a multi-party conference service flowchart employed in a network with NGN network Architecture, and to standardize muiti-kinds of multi-party conference services on Mc interface, therefore guaranteeing the measurability of Mc interface when the equipments of different manufacturers inter-connect.

In order to realize the above objects, the present invention discloses a method for realizing multi-party conference service in a telecommunication network with NGN network Architecture, which realizes the separation of Control Plane and User Plane based on dividing the mobile switch center MSC into MSC server and media gateway MGW. Said multi-party conference service includes the establishment of multi-party conference service, the release of multi-party conference service, the restoring of multi-party conference service and / or the adding / separating of at least one remote user, the method includes the following steps of:
(1) the dispatcher sending request message to MSC server, to request the establishment of multi-party conference service, the release of multi-party conference service, the restoring of multi-party conference service and / or the adding of at least one remote user; and/or the user side sending request for releasing multi-party conference service or separating at least one remote user to the MSC server to request releasing multi-party conference or separating at least one remoter terminal;
(2) MSC server sending commands to media gateway MGW and/or media gateway MGW_{MPTV} supporting multi-party conference bridge, the media gateway MGW and/or media gateway MGW_{MPTV} supporting multi-party conference bridge operating the terminal;
(3) after accomplishing the above operation, notifying the dispatcher and/or remote user that the multi-party conference service has been realized.

The command sent by MSC server to media gateway MGW and/or media gateway MGW_{MPTV} supporting multi-party conference bridge is one of the following commands or their combination:
first class, Modify command, for asking media gateway MGW or media gateway MGW_{MPTV} supporting multi-party conference bridge to stop sending call maintaining tone or to transmit call maintaining tone to a remote user in holding state; or for notifying the media gateway MGW to modify the connection direction of terminal, and to release the related carrying at the same time; or for requesting media gateway MGW disconnecting/bidirectionally connecting the connection between this terminal and another terminal; or for requesting the media gateway MGW_{MPTV} which supports multi-party conference bridge connecting the connection between this terminal and another terminal bidirectionally; or for changing the disconnected external connection into non-active state or transmitting/receiving state;
second class, Move command, for requesting the media gateway MGW establishing a new context; or for requesting turning the terminal from original context to the newly established context; or for requesting the media gateway MGW_{MPTY} which supports multi-party conference bridge moving the terminal from the original context to a new context, and /or MGW returning response, including the newly applied context; or for stopping sending call maintaining tone to the remote user;
third class, ADD command, for requesting the media gateway MGW establishing a new terminal in the context, or requesting the media gateway MGW_{MPTY} supporting multi-party conference bridge establishing a new context and a new terminal, and/or for requesting the media gateway MGW_{MPTY} which supports multi-party bridge establishing a new terminal in the context C_{MPTY};
forth class, Subtract command, for requesting media gateway releasing terminal; and/or for requesting the media gateway MGW_{MPTY} which supports multi-party conference bridge releasing terminal.

The present invention also provides a method for establishing multi-party conference service when the basic call media gateway does not support the multi-party conference bridge. This method is employed in a network with NGN network Architecture, in which the call between user A and user B is maintained, the call between user A and user C is in active state, including the following steps of:
(1) user A sending multi-party conference establishment request message to the MSC server to request establishing the multi-party conference between user A, B and C;
(2) MSC server sending Modify command to the media gateway to request the media gateway stopping sending call maintaining tone to remote user B;
(3) MSC server sending Move command to the media gateway to request the media gateway moving terminal T_{A} from context C_{AC} to a new context, that is, newly established context C_{A};
(4) MSC server sending ADD command to the media gateway supporting multi-party conference bridge to request the multi-party media gateway MGW_{MPTY} establishing a new context and a new terminal, that is context C_{MPTY} and terminal T_{A0}; MSC server sending ADD command to the media gateway supporting multi-party conference bridge to request MGW_{MPTY} establishing a new terminal in C_{MPTY}, that is, terminal T_{B0}; MSC server sending ADD command to the media gateway supporting multi-party conference bridge to request MGW_{MPTY} establishing a new terminal in MGW_{MPTY}, that is, terminal T_{C0};
(5) MSC server sending ADD command to the media gateway to request media gateway establishing a new terminal in C_{A}, that is, terminal T_{A1};
(6) MSC server sending ADD command to the media gateway to request the media gateway establishing a new terminal in C_{AB}, that is, terminal T_{B1};
(7) MSC server sending ADD command to the media gateway to request media gateway establishing a new terminal in C_{AC}, that is, terminal TC₁;
(8) after accomplishing the operation on terminal, telling remote user B to restore the maintaining call, and attend the multi-party conference; telling remote user C the call is added to multi-party conference; telling user A the multi-party conference is established successfully.

The present invention further provides a method for releasing multi-party conference service when the basic call media gateway does not support multi-party conference bridge, which is employed in a network with NGN network Architecture, and at least has user A, B and C perform multi-party conference, in which, the dispatcher A requests releasing multi-party conference. It is characterized in including the following steps of:
(1) user A and MSC server accomplishing the release process of access side, and at the same time, notifying the remote user that the call has been released; after the remote user B releasing the signal and carrying, it returning to call release response;
(2) MSC server sending Subtract command to MGW_{MPTY} to request MGW_{MPTY} releasing the terminal T_{B0};
(3) MSC server sending Modify command to MGW to notify MGW to modify the connection direction of T_{B1}, and at the same time, releasing the related carrying;
(4) MSC server sending Subtract command to MGW to request MGW releasing terminal T_{B1};
(5) after remote user B releasing the accomplishing signal and carrying, it returning to the call release response;
(6) MSC server sending Modify command to MGW to notify MGW to modify the connection direction of T_{B}, and at the same time releasing the related carrying;
(7) MSC server sending Subtract command to MGW to notify MGW to release terminal T_{B};
(8) user A and MSC server accomplishing the release process of access side for the last call, releasing Iu interface, and at the same time, notifying the remote user that the call has been released;
(9) MSC server sending Subtract command to MGW to notify MGW to release terminal T_{A};
(10) MSC server sending Subtract command to MGW_{MPTY} to request MGW_{MPTY} releasing the terminal T_{A0};
(11) MSC server sending Modify command to MGW to notify MGW to modify the connection direction of T_{A1}, and at the same time, releasing the related carrying;
(12) MSC server sending Subtract command to MGW to request MGW releasing terminal T_{A1};
(13) MSC server sending Subtract command to MGW_{MPTY} to request MGW_{MPTY} releasing the terminal T_{C0};
(14) MSC server sending Modify command to MGW to notify MGW to modify the connection direction of T_{C1}, and at the same time, releasing the related carrying;
(15) MSC server sending Subtract command to MGW to request MGW releasing terminal T_{C1};
(16) after remote user C releasing the accomplishing signal and carrying, it returns to the call release response;
(17) MSC server sending Modify command to MGW to notify MGW to modify the connection direction of T_{C}, and at the same time, to release the related carrying;
(18) MSC server sending Subtract command to MGW to notify MGW to release terminal T_{C}.

Th present invention further provides a method for releasing single call in multi-party conference in which the basic call media gateway does not support multi-party conference bridge, which is employed in a network with NGN network Architecture and has at least user A, B and C perform the multi-party conference, and remote user B notify the releasing of call, which is characterized in including the following steps of:
(1) MSC server performing the release process with the user access side;
(2) MSC server sending Subtract command to MGW_{MPTY} to request MGW_{MPTY} releasing the terminal T_{C0};
(3) MSC server sending Modify command to MGW to notify MGW to modify the connection direction of T_{C1}, and at the same time, to release the related carrying;
(4) MSC server sending Subtract command to MGW to request MGW releasing terminal T_{C1};
(5) MSC server sending Modify command to MGW to notify MGW to modify the connection direction of T_{C}, and at the same time, to release the related carrying;
(6) MSC server sending Subtract command to MGW to notify MGW to release terminal T_{C};
(7) notifying the remote user that the call releasing of its own side is accomplished.

The present invention further provides a method for separating one remote user from multi-party conference when the basic call media gateway does not support multi-party conference bridge, which is employed in a network with NGN network Architecture, and has at least user A, B and C perform multi-party conference, the dispatcher A request separating remote user C, and perform the private conversation with user C, while other users in multi-party conference can continue to talk, which is characterized in including the following steps of:
(1) MSC server sending MOVE command to MGW_{MPTY} to request transferring the terminal T_{C0} to a new context, MGW returning response, including the newly applied context C_{C};
(2) MSC server sending MOVE command to MGW_{MPTY} to request transferring the terminal T_{A0} to context C_{C};
(3) notifying remote user C that the call has been separated, notifying other remote users in multi-party conference that the multi-party conference is maintained, and notifying user A that the separation operation has been accomplished successfully.

The present invention further provides a method for separating one remote user from multi-party conference when the basic media gateway does not support multi-party conference bridge, which is employed in a network with NGN network Architecture, and has at least user A, B and C perform the multi-party conference, the dispatcher A request separating remote user C, and perform private conversation with user C, while the other users in the multi-party conference can continue to talk, which is characterized in including the following steps of:
(1) MSC server sending Subtract command to MGW_{MPTY} to request MGW_{MPTY} releasing terminal T_{C0};
(2) MSC server sending Subtract command to MGW_{MPTY} to request MGW_{MPTY} releasing terminal T_{A0};
(3) MSC server sending Modify command to MGW to notify MGW to modify the connection direction of T_{C1}, and at the same time, to release the related carrying;
(4) MSC server sending Subtract command to MGW to request MGW releasing terminal T_{C1};
(5) MSC server sending Modify command to MGW to notify MGW to modify the connection direction of T_{A1}, and at the same time, to release the related carrying;
(6) MSC server sending Subtract command to MGW to request MGW releasing terminal T_{A1};
(7) MSC server sending MOVE command to MGW to request transferring terminal T_{A} to context C_{AC};
(8) notifying remote user C that the call has been separated, notifying other remote users in multi-party conference that the multi-party conference has been maintained, and notifying user A that the separation operation has been accomplished successfully.

The present invention further provides a method for maintaining conference when there is private call in multi-conference in which basic call media gateway does not support multi-party conference bridge, which is employed in a network with NGN network Architecture, and has at least user A, B and C perform multi-party conference, user A and user B perform multi-party conference, while the call between user A and user C is maintained, which is characterized in including the following steps of:
(1) MSC server sending Modify command to MGW_{MPTY} to notify MGW_{MFTY} to stop sending call maintaining tone to remote user C;
(2) MSC server sending MOVE command to MGW_{MPTY} to notify MGW to transfer the terminal T_{A0} from context C_{MPTY} to C_{C};
(3) notifying remote user C that the maintained call has been restored, notifying the remote users in multi-party conference that the multi-party conference has been maintained, and at the same time, notifying the dispatcher that the maintained call has been restored, therefore the multi-party conference has been maintained.

The present invention further provides a method for maintaining conference when there is private call in multi-conference in which basic call media gateway does not support multi-party conference bridge, which is employed in a network with NGN network Architecture, and has at least user A, B and C perform multi-party conference, user A and user B perform multi-party conference, while the call between user A and user C is maintained, which is characterized in including the following steps of:
(1) MSC server sending Modify command to MGW to notify MGW to stop sending call maintaining tone to remote user C;
(2) MSC server sending MOVE command to MGW to notify MGW to transfer terminal T_{A} from context C_{A} to C_{AC};
(3) notifying remote user C that the maintained call has been restored, notifying the remote users in multi-party conference that the multi-party conference has been maintained, and at the same time, notifying the dispatcher that the maintained call has been restored, therefore the multi-party conference has been maintained.

The present invention further provides a method for maintaining conference when there is no private call in the multi-party conference in which the basic call media gateway does not support multi-parly conference bridge, which is employed in a network with NGN network Architecture, and has at least user A, B and C perform multi-party conference, and the dispatcher A request maintaining the multi-party conference, which is characterized in including the following steps of:
(1) MSC server sending Modify command to MGW to request MGW isolating the terminal T_{A} and other terminals in C_{A};
(2) notifying the remote users of multi-party conference that the multi-party conference has been maintained, and at the same time, notifying the dispatcher that the operation for maintaining the multi-party conference has been performed successfully.

The present invention further provides a method for maintaining conference when there is no private call in the multi-party conference in which the basic call media gateway does not support multi-party conference bridge, which is employed in a network with NGN network Architecture, and has at least user A, B and C perform multi-parly conference, dispatcher A request maintaining the multi-party conference, which is characterized in including the following steps of:
(1) MSC server sending Modify command to MGW to request MGW isolating the terminal T_{AO} and other terminals in C_{MPTY};
(2) notifying the remote users of multi-party conference that the multi-party conference has been maintained, and at the same time, notifying the dispatcher that the operation for maintaining the multi-party conference has been performed successfully.

The present invention further provides a method for maintaining conference when there is no private call in the multi-party conference in which the basic call media gateway does not support multi-party conference bridge, which is employed in a network with NGN network Architecture, and has at least user A, B and C perform multi-party conference, dispatcher A request maintaining the multi-party conference, which is characterized in including the following steps of:
(1) MSC server sending Modify command to MGW to request MGW changing the outside connection of terminal T_{A1} into inactive state;
(2) notifying the remote users of multi-party conference that the multi-party conference has been maintained, and at the same time, notifying the dispatcher that the operation for maintaining the multi-party conference has been performed successfully.

The present invention further provides a method for restoring conference when there is private call in multi-party conference in which the basic call media gateway does not support multi-party conference bridge, which is employed in a network with NGN network Architecture, in which user A and user B perform multi-party conference that is maintained, at the same time, there is an active call between user A and user B, the dispatcher requests restoring the maintained multi-party conference, which is characterized in including the following steps of:
(1) MSC sever sending MOVE command to MGW_{MPTY} to request MGW_{MPTY} transferring T_{A0} from C_{C} to C_{MPTY};
(2) MSC server sending Modify command to MGW_{MPTY} to request MGW_{MPTY} sending call maintaining tone to remote user C;
(3) notifying remote user C that the call has been maintained, notifying the remote users in the multi-party conference that the maintained call has been restored, and at the same time, notifying the dispatcher that the private call with user C has been maintained, therefore, the originally maintained multi-party conference has been restored.

The present invention further provides a method for restoring conference when there is private call in multi-party conference in which the basic call media gateway does not support multi-party conference bridge, which is employed in a network with NGN network Architecture, in which, user A and user B perform multi-party conference, and this multi-party conference is maintained, and at the same time, there is an active call between user A and user B, the dispatcher requests restoring the maintained multi-party conference, which is characterized in including the following steps of:
(1) MSC sever sending MOVE command to MGW to request MGW transferring T_{A} from C_{AC} to C_{A};
(2) MSC server sending Modify command to MGW to request MGW sending call maintaining tone to remote user C;
(3) notifying remote user C that the call has been maintained, notifying the remote users in the multi-party conference that the maintained call has been restored, and at the same time, notifying the dispatcher that the private call with user C has been maintained, therefore, the originally maintained multi-party conference has been restored.

The present invention further provides a method for restoring conference when there is no private call in multi-party conference in which the basic call media gateway does not support multi-party conference bridge, which is employed in the network with NGN network Architecture, in which the multi-party conference between user A, B and C has been maintained, the dispatcher requests restoring the multi-party conference, which is characterized in including the following steps of:
(1) MSC server sending Modify command to MGW to request MGW connecting T_{A} and other terminals in C_{A} bidirectionally;
(2) notifying the remote users of multi-party conference that the multi-party conference has been restored, and at the same time, notifying the dispatcher that the operation for restoring the multi-party conference has been performed successfully.

The present invention further provides a method for restoring conference when there is no private call in multi-party conference in which the basic call media gateway does not support multi-party conference bridge, which is employed in the network with NGN network Architecture, in which the multi-party conference between user A, B and C has been maintained, the dispatcher requests restoring the multi-party conference, which is characterized in including the following steps of:
(1) MSC server sending Modify command to MGW_{MPTY} to request MGW_{MPTY} connecting T_{A0} and other terminals in C_{MPTY} bidirectionally;
(2) notifying the remote users of multi-party conference that the multi-party conference has been restored, and at the same time, notifying the dispatcher that the operation for restoring the multi-party conference has been performed successfully.

The present invention further provides a method for restoring conference when there is no private call in multi-party conference in which the basic call media gateway does not support multi-party conference bridge, which is employed in the network with NGN network Architecture, in which the multi-party conference between user A, B and C has been maintained, the dispatcher requests restoring the multi-party conference, which is characterized in including the following steps of:
(1) MSC server sending Modify command to MGW to request MGW changing the outside connection of terminal T_{A1} into a transmitting /receiving state;
(2) notifying the remote user of multi-party conference that the multi-party conference has been restored, and at the same time, notifying the dispatcher that the operation for restoring the multi-party conference has been performed successfully.

The present invention further provides a method for adding a remote user when the multi-party MTPY in multi-party conference in which the basic call media gateway does not support multi-party conference bridge is in active state, which is employed in the network with NGN network Architecture, in which, the private call between user A and user C has been maintained, while the multi-party conference is in active state, the dispatcher requests adding the private call to the multi-party conference, which is characterized in including the following steps of:
(1) MSC server sending MOVE command to MGW_{MPTY} to request stopping sending call maintaining tone to remote user C, and to request MGW_{MPTY} transferring terminal T_{C0} from C_{C} to C_{MPTY},
(2) notifying the remote user C that the maintained call has been restored, and has attended the multi-party conference, notifying other remote users in multi-party conference that a new user has joined in, and at the same time, notifying the dispatcher that the operation for adding the private call to the multi-party conference has been performed successfully.

The present invention further provides a method for adding a remote user when the multi-party MTPY in multi-party conference in which the basic call media gateway does not support multi-party conference bridge is in active state, which is employed in the network with NGN network Architecture, in which, the private call between user A and user C has been maintained, while the multi-party conference is in active state, the dispatcher requests adding the private call to the multi-party conference, which is characterized in including the following steps of:
(1) MSC server sending Modify command to MGW to request MGW stopping sending call maintaining tone to remote user C;
(2) MSC server sending ADD command to MGW_{MPTY} to request MGW_{MPTY} applying new terminal T_{C0} in C_{MPTY};
(3) MSC server sending ADD command to MGW to request MGW applying new terminal T_{C1} in C_{AC};
(4) notifying the remote user C that the maintained call has been restored, and has attended the multi-party conference, notifying other remote users in multi-party conference that a new user has joined in, and at the same time, notifying the dispatcher that the operation for adding the private call to the multi-party conference has been performed successfully.

The present invention further provides a method for adding a remote user when the multi-party MTPY in multi-party conference in which the basic call media gateway does not support multi-party conference bridge is in a maintaining state, which is employed in the network with NGN network Architecture, in which, there is private call in active state between user A and user C, while the multi-party conference has been maintained, the dispatcher requests adding the private call to the multi-party conference, which is characterized in including the following steps of:
(1) MSC server sending MOVE operation to MGW_{MPTY} to request MGW_{MPTY} transferring T_{A0} from C_{C} to C_{MPTY};
(2) MSC server sending MOVE operation to MGW_{MPTY} to request MGW_{MPTY} transferring T_{C0} from C_{C} to C_{MPTY};
(3) notifying the remote user C that the call has attended the multi-party conference, notifying other remote users in multi-party conference that the multi-party conference has been restored, and a new user has joined in the multi-party conference, and at the same time, notifying the dispatcher that the operation for adding the private call to the multi-party conference has been performed successfully.

The present invention further provides a method for adding one remote user when the multi-party MTPY in multi-party conference in which the basic call media gateway does not support multi-party conference bridge is in a maintaining state, which is employed in the network with NGN network Architecture, in which, there is private call in active state between user A and user C, while the multi-party conference has been maintained, the dispatcher requests adding the private call to the multi-party conference, which is characterized in including the following steps of:
(1) MSC server sending MOVE operation to MGW to request MGW transferring T_{A} from C_{AC} to C_{A};
(2) MSC server sending ADD operation to MGW_{MPTY} to request MGW_{MPTY} adding a new terminal in C_{MPTY}, that is, T_{C0};
(3) MSC server sending ADD operation to MGW_{MPTY} to request MGW_{MPTY} adding a new terminal in C_{MPTY}, that is, T_{A0};
(4) MSC server sending ADD operation to MGW to request MGW adding a new terminal in C_{AC}, that is, T_{C1};
(5) MSC server sending ADD operation to MGW to request MGW adding a new terminal in C_{A}, that is, T_{A1};
(6) notifying the remote user C that the call has attended the multi-party conference, notifying other remote users in multi-party conference that the multi-party conference is restored, and a new user has joined in the multi-party conference, and at the same time, notifying the dispatcher that the operation for adding the private call to the multi-party conference has been performed successfully.

By applying the present invention, it is possible to open multiple standard multi-party conference service processes on Mc interface between MGC media gateway controller and MGW media gateway, such as the establishment, release, maintaining of multi-party conference etc., that is, to fix the message flow on Mc interface when realizing multi-party conference service in a network with NGN network Architecture, therefore, when different manufactures interconnect with each other, the measurability of Mc interface can be guaranteed.

### Brief description of drawings

Fig.1 is the topology structure diagram of network model I according to the present invention;
Fig.2 is the topology structure diagram of network model II according to the present invention;
Fig.3 is the time sequence for establishing multi-party conference service of network model I;
Fig.4 is the time sequence for releasing multi-party conference service of network model I;
Fig.5 is the time sequence for releasing single call of multi-party conference of network model I;
Fig.6 is the time sequence of form I for separating a remote user according to network model I;
Fig.7 is the time sequence of form II for separating a remote user according to network model I;
Fig.8 is the time sequence of form I for maintaining multi-party conference ( private call existing) according to network model I;
Fig.9 is the time sequence of form II for maintaining multi-party conference ( private call existing) according to network model I;
Fig.10 is the time sequence of form I for maintaining multi-party conference (no private call) according to network model I;
Fig.11 is the time sequence of form II for maintaining multi-party conference (no private call) according to network model I;
Fig.12 is the time sequence of form III for maintaining multi-party conference (no private call) according to network model I;
Fig.13 is the time sequence of form I for restoring multi-party conference (private call existing according to network model I;
Fig.14 is the time sequence of form II for restoring multi-party conference (private call existing) according to network model I;
Fig.15 is the time sequence of form I for restoring multi-party conference (no private call) according to network model I;
Fig.16 is the time sequence of form II for restoring multi-party conference (no private call) according to network model I;
Fig.17 is the time sequence of form III for restoring multi-party conference (no private call) according to network model I;
Fig.18 is the time sequence of form I for multi-party conference adding a remote user (MTPY is in Active) according to network model I;
Fig.19 is the time sequence of form II for multi-party conference adding a remote user (MTPY is in Active) according to network model I;
Fig.20 is the time sequence of form I for multi-party conference adding a remote user (MTPY is in Held) according to network model I;
Fig.21 is the time sequence of form II for multi-party conference adding a remote user (MTPY is in Held) according to network model I;
Fig.22 is the time sequence for establishing multi-party conference service according to network model II;
Fig.23 is the time sequence for releasing multi-party conference service according to network model II;
Fig.24 is the time sequence for releasing single call of multi-party conference according to network model II;
Fig.25 is the time sequence for separating a remote user according to network model II;
Fig.26 is the time sequence for maintaining multi-party conference (private call existing) according to network model II;
Fig.27 is the time sequence for maintaining multi-party conference (no private call) according to network model II;
Fig.28 is the time sequence for restoring multi-party conference (private call existing) according to network model II;
Fig.29 is the time sequence for restoring multi-party conference (no private call ) according to network model II;
Fig.30 is the time sequence for multi-party conference adding a remote user (MTPY is in Active) according to network model II;

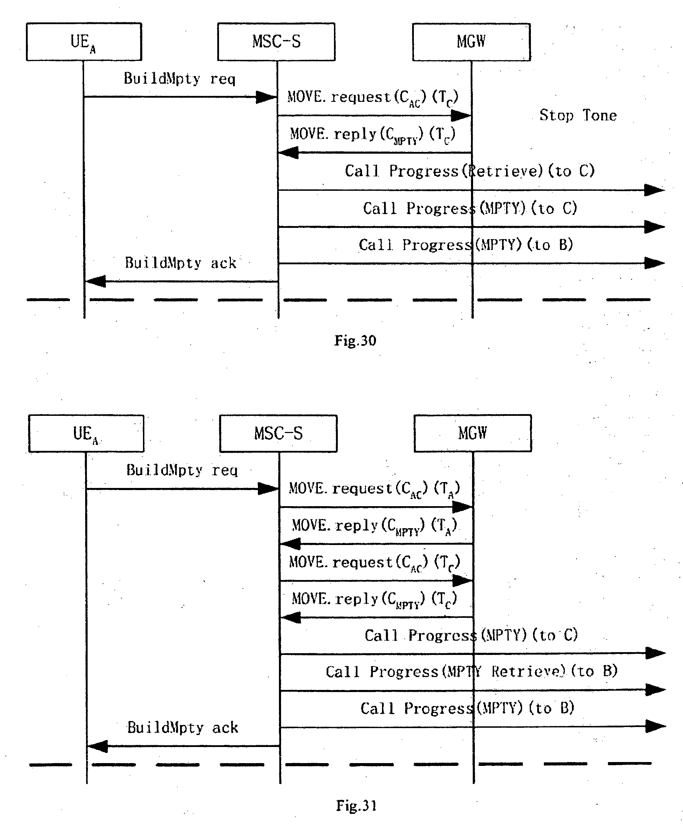

Fig.30 is the time sequence for multi-party conference adding a remote user (MTPY is in Held) according to network model II;

### Preferred Embodiment of the Present Invention

Next, the embodiment of the present invention will be further described in detail in connection with the appending drawings.

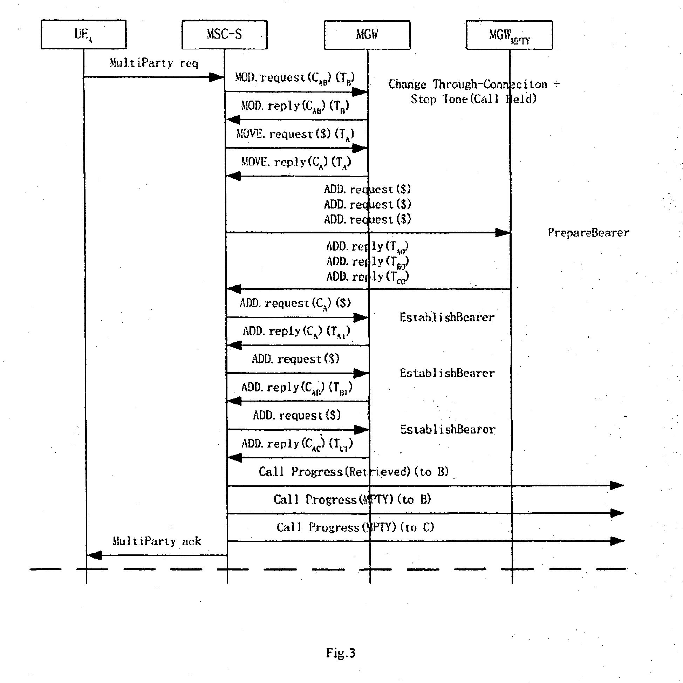

Fig.3 is the time sequence for establishing multi-party conference service according to network model I. The service flowchart is as follows:

The call between user A and user B is maintained, and the call between user A and user C is in active state.

User A sends multi-party conference establishment request message to MSC SERVER to request establishing the multi-party conference between user A, B and C.

MSC SERVER sends Modify command to MGW to request MGW stopping sending call maintaining tone to remote user B.

MSC SERVER sends MOVE command to MGW to request MGW transferring T_{A} from C_{AC} to a new context, that is, newly established context CA.

MSC SERVER sends ADD command to MGW (supporting multi-party conference bridge ), to request MGW_{MPTY} establishing a new context and a new terminal, that is, context C_{MPTY} and terminal T_{A0}. MSC SERVER sends ADD command to MGW (supporting multi-party conference bridge), to request MGW_{MPTY} establishing a new terminal in C_{MPTY}, that is, terminal T_{B0}. MSC SERVER sends ADD command to MGW (supporting multi-party conference bridge) to request MGW_{MPTY} establishing a new terminal in C_{MPTY}, that is, terminal T_{C0}.

MSC SERVER sends ADD command to MGW to request MGW establishing a new terminal in C_{A}, that is, terminal T_{A1}.

MSC SERVER sends ADD command to MGW to request MGW establishihg a new terminal in C_{AB}, that is, terminal T_{B1}.

MSC SERVER sends ADD command to MGW to request MGW establishing a new terminal in C_{AC}, that is, terminal T_{C1}.

After finishing the operation of terminal, MSC SERVER notifys remote user B that the maintained call has been restored, and has attended the multi-party conference, notifys the remote user C that the call has been added to the multi-party conference, notifys UE_{A} that the multi-party conference has been established successfully.

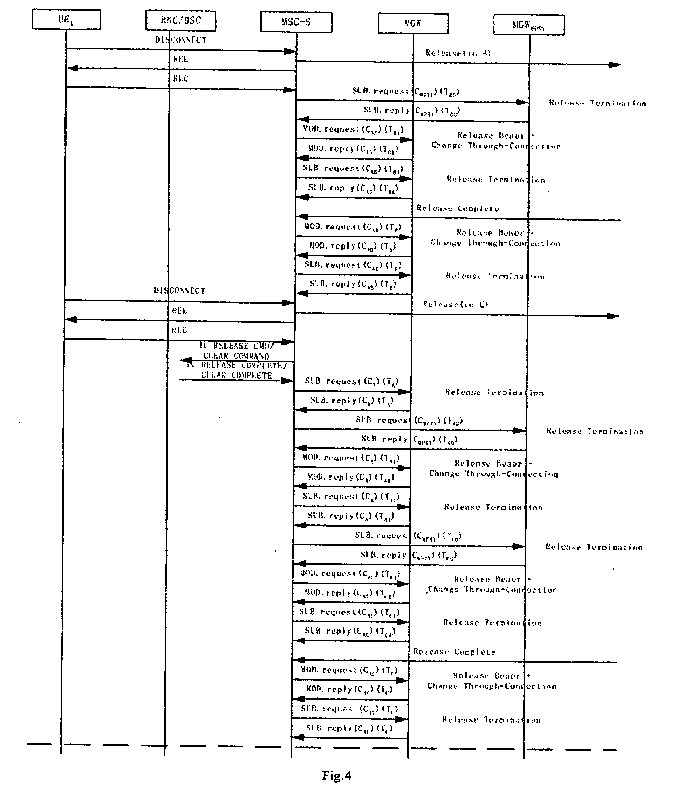

Fig.4 is the time sequence for releasing multi-party conference service according to network model I. The service flowchart is as follows:

User A, B and C perform multi-party conference, the dispatcher user A requests releasing multi-party conference.

UE_{A} and MSC SERVER finish the release process of access side, because user has another call, the Iu interface will not be released. At the same time, remote users are notified that the call has been released. After remote user B releasing the accomplishing signal and carrying, it returns call release response.

MSC SERVER sends Subtract command to MGW_{MPTY} to request MGW_{MPTY} releasing terminal T_{B0}.

MSC SERVER sends Modify command to MGW to notify MGW to modify the connection direction of T_{B1}, and at the same time, to release the related carrying.

MSC SERVER sends Subtract command to MGW to request MGW releasing terminalT_{B1}.

After remote user B releasing accomplishing signal and carrying, it returns call release response.

MSC SERVER sends Modify command to MGW to notify MGW to modify the connection direction of T_{B}, and at the same time, to release the related carrying.

MSC SERVER sends Subtract command to MGW to notify MGW to release terminal T_{B}.

UE_{A} and MSC SERVER finish the release process of access side for the last call, because after the user releasing the call, there is no call service any more, Iu interface will be released, that is to finish the release process of Iu interface. At the same time, the remote users are notified that the call has been released. After Iu interface being released:

MSC SERVER sends Subtract command to MGW to notify MGW to release terminal T_{A}.

MSC SERVER sends Subtract command to MGW_{MPTY} to request MGW_{MPTY} releasing terminal T_{A0}.

MSC SERVER sends Modify command to MGW to notify MGW to modify the connection direction of T_{A1}, and at the same time, to release the related carrying.

MSC SERVER sends Subtract command to MGW to request MGW releasing terminal T_{A1}.

MSC SERVER sends Subtract command to MGW_{MPTY} to request MGW_{MPTY} releasing terminal T_{C0}.

MSC SERVER sends Modify command to MGW to notify MGW to modify the connection direction of T_{C1}, and at the same time, to release the related carrying.

MSC SERVER sends Subtract command to MGW to request MGW releasing terminal T_{C1}.

After remote user C releasing accomplishing signal and carrying, it returns call release response:

MSC SERVER sends Modify command to MGW to notify MGW to modify the connection direction of T_{C1}, and at the same time, to release the related carrying.

MSC SERVER sends Subtract command to MGW to notify MGW to release terminal T_{C}.

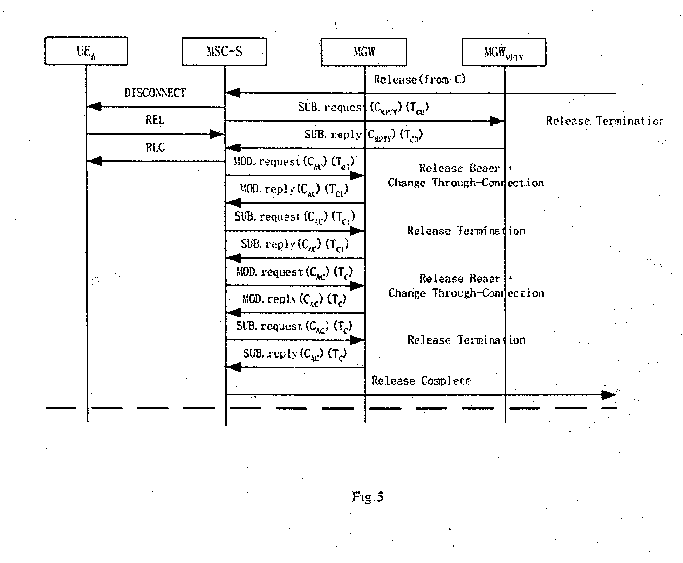

Fig.5 is the time sequence for releasing single call of multi-party conference according to network model I. The service flowchart is as follows:

User A, B and C perform multi-party conference, remote user B notifys that the call has been released, MSC-SERVER accomplishes the release process of access side with the UE, and at the same time, performs the following operation of Mc interface:

MSC SERVER sends Subtract command to MGW_{MPTY} to request MGW_{MPTY} releasing terminal T_{C0}.

MSC SERVER sends Modify command to MGW to notify MGW to modify the connection direction of T_{C1}, and at the same time, to release the related carrying.

MSC SERVER sends Subtract command to MGW to request MGW to release terminal T_{C1}.

MSC SERVER sends Modify command to MGW to notify MGW to modify the connection direction of T_{C}, and at the same time, to release the related carrying.

MSC SERVER sends Subtract command to MGW to notify MGW to release terminal T_{C}.

Notifying the remote users that the call of its own side has been released.

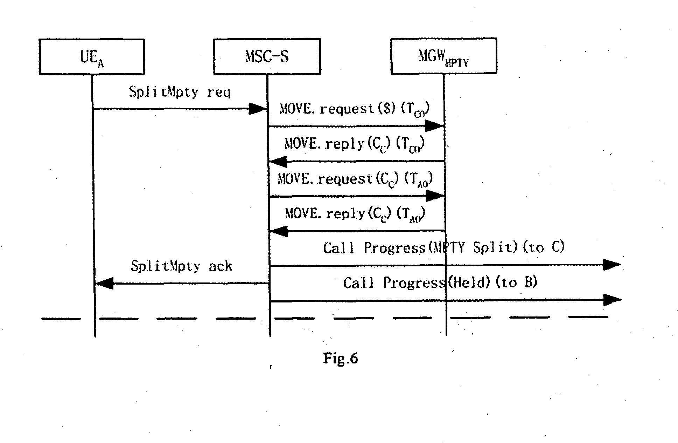

Fig.6 is the time sequence of form I for separating a remote user according to network model I. The service flowchart is as follows:

User A, B and C perform multi-party conference, the dispatcher requests separating remote user C, and performs private conversion with user C, while other users of multi-party conference can continue conversion.

MSC SERVER sends MOVE command to MGW_{MPTY} to request transferring terminal T_{CO} to a new context, MGW returns response including the newly applied context C_{C}.

MSC SERVER sends MOVE command to MGW_{MPTY}, to request transferring termnal T_{A0} to context C_{C}.

Notifying remote user C that the call has been separated. Notifying other remote user of multi-party conference that the multi-party conference has been maintained, and notifying UE_{A} that the separation operation has been accomplished successfully.

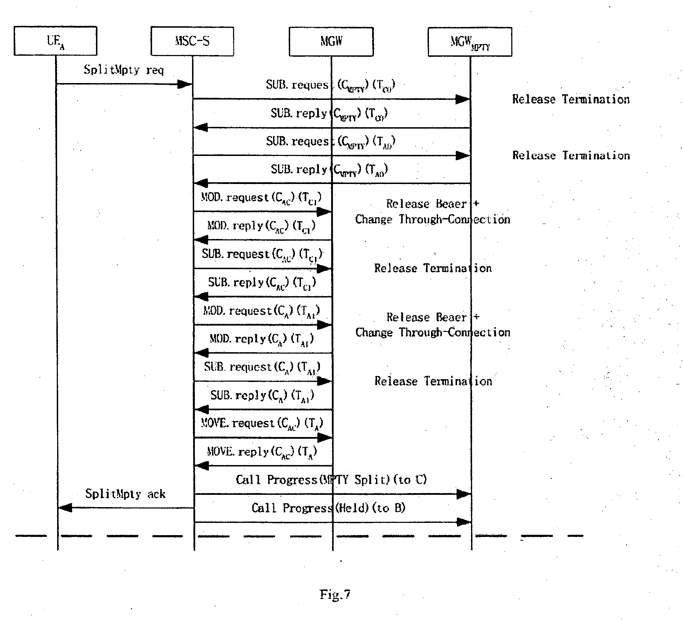

Fig.7 is the time sequence of form II for separating a remote user according to network model I. The service flowchart is as follows:

User A, B and C perform multi-party conference, the dispatcher requests separating the remote user C, and performs private conversion with user C, while the other users of multi-party conference can continue conversion.

MSC SERVER sends Subtract command to MGW_{MPTY} to request MGW_{MPTY} releasing terminal T_{C0}.

MSC SERVER sends Subtract command to MGW_{MPTY} to request MGW_{MPTY} releasing terminal T_{A0}.

MSC SERVER sends Modify command to MGW to notify MGW to modify the connection direction of T_{C1}, and at the same time, to release the related carrying.

MSC SERVER sends Subtract command to MGW to request MGW releasing terminal T_{C1}.

MSC SERVER sends Modify command to MGW to notify MGW to modify the connection direction of T_{A1}, and at the same time, to release the related carrying.

MSC SERVER sends Subtract command to MGW to request MGW releasing terminal T_{A1}.

MSC SERVER sends MOVE command to MGW to request transferring terminal T_{A} to context C_{AC}.

Notifying remote user C that the call has been separated, notifying the other remote users of multi-party conference that the multi-party conference has been maintained, and notifying UE_{A} that the separation operation has been accomplishes successfully.

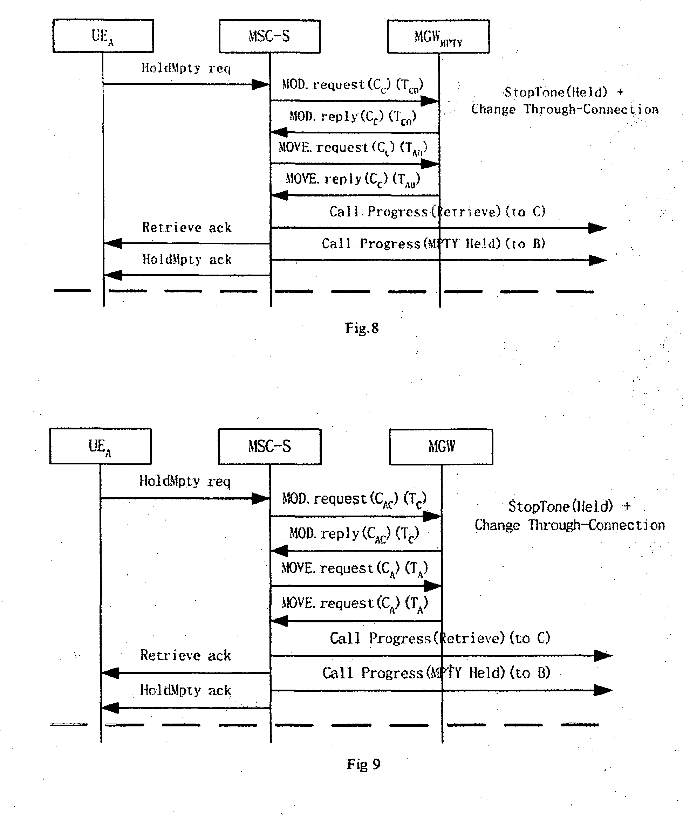

Fig.8 is the time sequence of form I for maintaining multi-party conference ( private call existing) according to network model I. The service flowchart is as follows:

User A and user B perform multi-party conference, while the call between user A and user c is maintained.

MSC SERVER sends Modify command to MGW_{MPTY} to notify MGW_{MPTY} to stop sending call maintaining tone to remote user C.

MSC SERVER sends MOVE command to MGW_{MPTY} to notify MGW to transfer terminal T_{A0} from context C_{MPTY} to C_{C}.

Notifying remote user C that the maintained call has been restored, notifying the remote users of multi-party conference that the multi-party conference has been maintained, and at the same time, notifying the dispatcher that the maintained call has been restored, while the multi-party conference has been maintained.

Fig.9 is the time sequence of form II for maintaining multi-party conference according to network model I. The service flowchart is as follows:

User A and user B perform multi-party conference, while the call between user A and user C is maintained.

MSC SERVER sends Modify command to MGW to notify MGW to stop sending call maintaining tone to user C.

MSC SERVER sends MOVE command to MGW to notify MGW to transfer terminal T_{A} from C_{A} to C_{AC}.

Notifying remote user C that the maintained call has been restored, notifying remote users of multi-party conference that the multi-party conference has been maintained. And at the same time, notifying the dispatcher that the maintained call has been restored, while the multi-party conference is maintained.

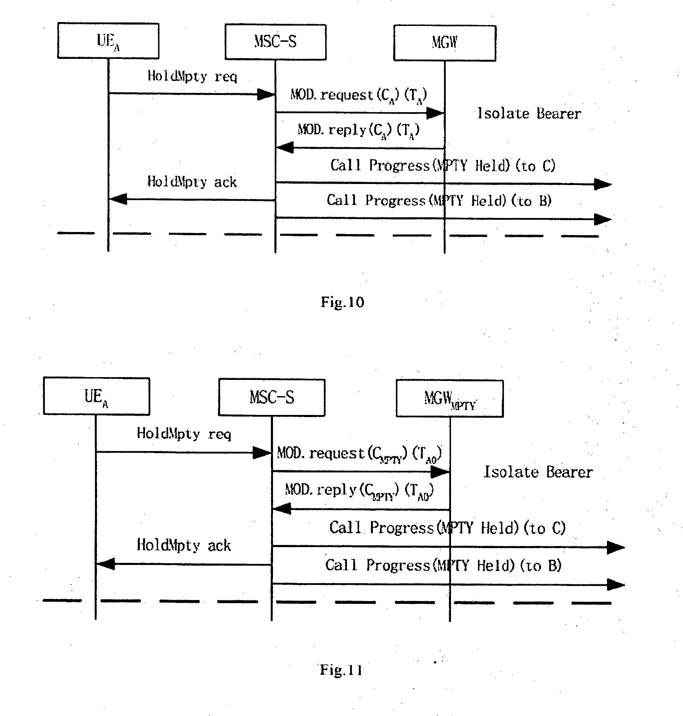

Fig.10 is the time sequence of form I for maintaining multi-party conference according to network model I (no private call). The service flowchart is as follows:

User A, B and C perform multi-party conference, the dispatcher requests maintaining the multi-party conference.

MSC SERVER sends Modify command to MGW to request MGW disconnecting terminal T_{A} and other terminals of C_{A}.

Notifying remote users of multi-party conference that the multi-party conference has been maintained. And at the same time, notifying the dispatcher that the operation for maintaining multi-party conference has been accomplished successfully.

Fig.11 is the time sequence of form II for maintaining multi-party conference (no private call) according to network model I. The service flowchart is as follows:

User A, B and C perform multi-party conference, the dispatcher requests maintaining the multi-party conference.

MSC SERVER sends Modify command to MGW to request MGW disconnecting terminal T_{A0} and other terminals of C_{MPTY}.

Notifying the remote users of multi-party conference that the multi-party conference has been maintained. And at the same time, notifying the dispatcher that the operation for maintaining the multi-party conference has been accomplished successfully.

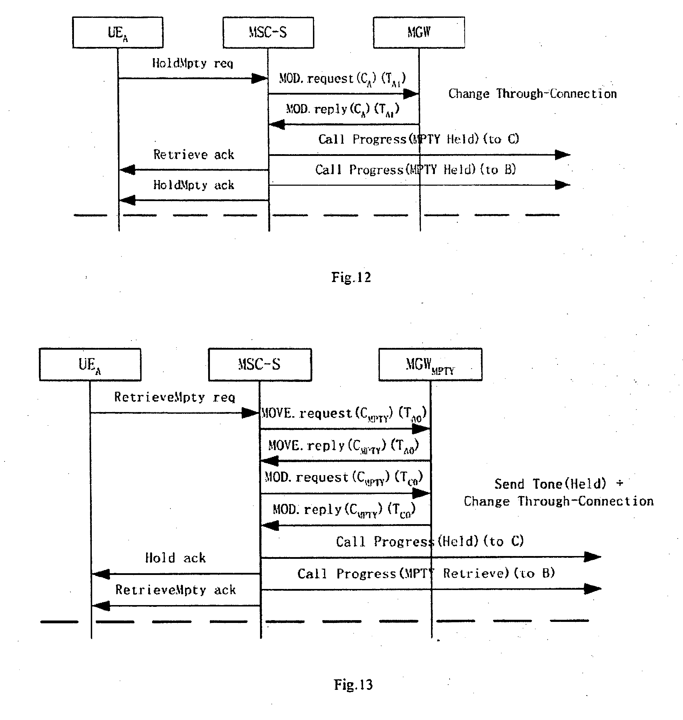

Fig.12 is the time sequence of form In for maintaining multi-party conference according to network model I (no private call). The service flowchart is as follows:

User A, B and C perform multi-party conference, the dispatcher requests maintaining the multi-party conference.

MSC SERVER sends Modify command to MGW to request MGW changing the outside connection of terminal T_{A}, into inactive state.

Notifying the remote users of multi-party conference that the multi-party conference has been maintained. And at the same time, notifying the dispatcher that the operation for maintaining the multi-party conference has been accomplished successfully.

Fig.13 is the time sequence of form I for restoring multi-party conference (private call existing) according to network model I. The service flowchart is as follows:

User A and user B perform multi-party conference, and this conference is maintained. And at the same time, there is active call between user A and user C. The dispatcher requests restoring the maintained multi-party conference.

MSC SERVER sends MOVE command to MGW_{MPTY} to request MGW_{MPTY} transferring T_{A0} from C_{C} to C_{MPTY}.

MSC SERVER sends Modify command to MGW_{MPTY} to request MGW_{MPTY} sending call maintaining tone to remote user C.

Notifying remote user C that the call has been maintained. Notifying the remote users of multi-party conference that the maintained call has been restored. And at the same time, notifying the dispatcher that the private call with user C is maintained while the originally maintained multi-party conference is restored.

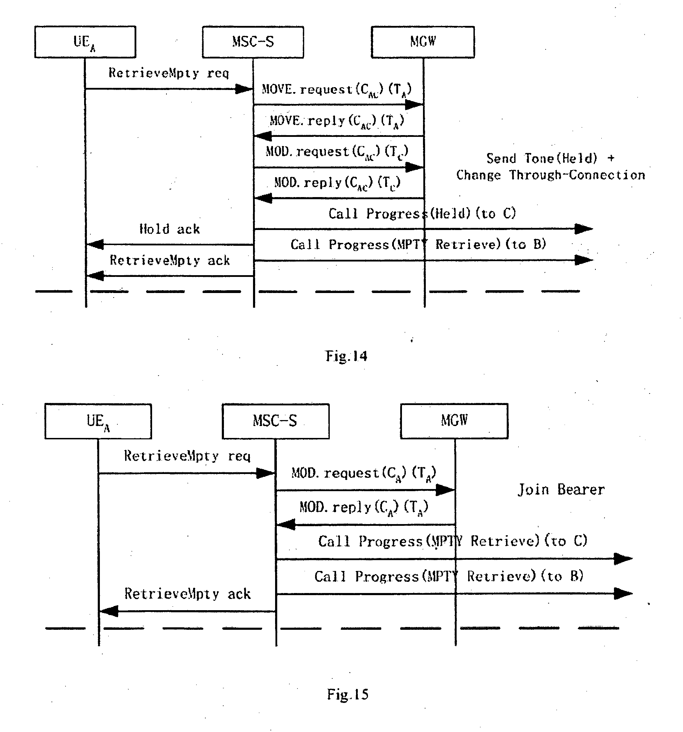

Fig.14 is the time sequence of form II for restoring multi-party conference (private call existing) according to network model I. The service flowchart is as follows:

User A and user B perform multi-party conference, and this multi-party conference has been maintained. And at the same time, there is an active call between user A and user C. The dispatcher requests restoring the maintained multi-party conference.

MSC SERVER sends MOVE command to MGW to request MGW transferring T_{A} from C_{AC} to C_{A}.

MSC SERVER sends Modify command to MGW to request MGW sending call maintaining tone to remote user C.

Notifying remote user C that the call has been maintained. Notifying the remote users of multi-party conference that the maintained call has been restored. And at the same time, notifying the dispatcher that the private call with user C has been maintained while the originally maintained multi-party conference has been restored.

Fig.15 is the time sequence of form I for restoring multi-party conference (no private call) according to network model I. The service flowchart is as follows:

The multi-party conference between user A, B and C is maintained, the dispatcher requests restoring the multi-party conference.

MSC SERVER sends Modify command to MGW to request MGW connecting TA and other terminals of C_{A} bidirectionally.

Notifying the remote users of multi-party conference that the multi-party conference has been restored. And at the same time, notifying the dispatcher that the operation for restoring multi-party conference has been performed successfully.

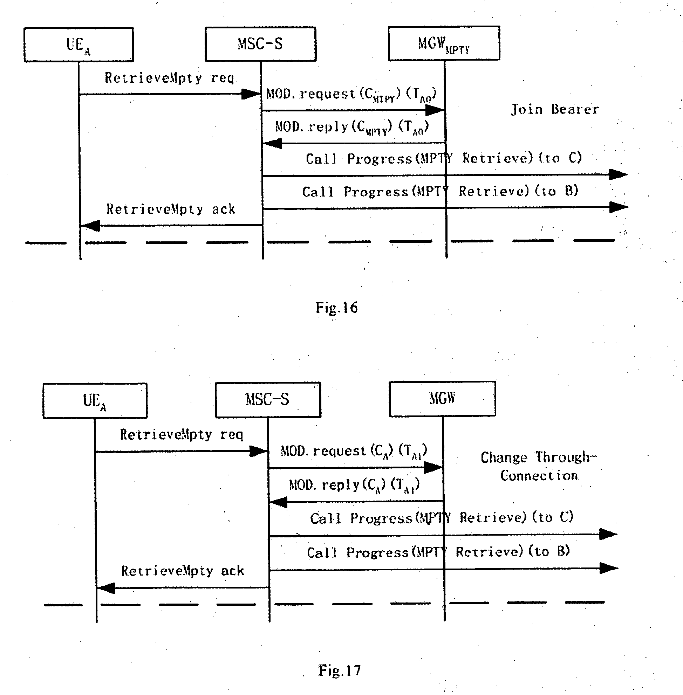

Fig.16 is the time sequence of form II for restoring multi-party conference (no private call) according to network model I. The service flowchart is as follows:

The multi-party conference between user A, B and C is maintained, the dispatcher requests restoring the multi-party conference.

MSC SERVER sends Modify command to MGW_{MPTY} to request MGW_{MPTY} connecting T_{AO} and other terminals of C_{MPTY} bidirectionally.

Notifying the remote users of multi-party conference that the multi-party conference has been restored. And at the same time, notifying the dispatcher that the operation for restoring multi-party conference has been performed successfully..

Fig.17 is the time sequence of form III for restoring multi-party conference (no private call) according to network model I. The service flowchart is as follows:

The multi-party conference between user A, B and C is maintained, the dispatcher requests restoring the multi-party conference.

MSC SERVER sends Modify command to MGW to request MGW changing the outside connection of terminal T_{A} into send/receive.

Notifying the remote users of multi-party conference that the multi-party conference has been restored. And at the same time, notifying the dispatcher that the operation for restoring multi-party conference has been performed successfully.

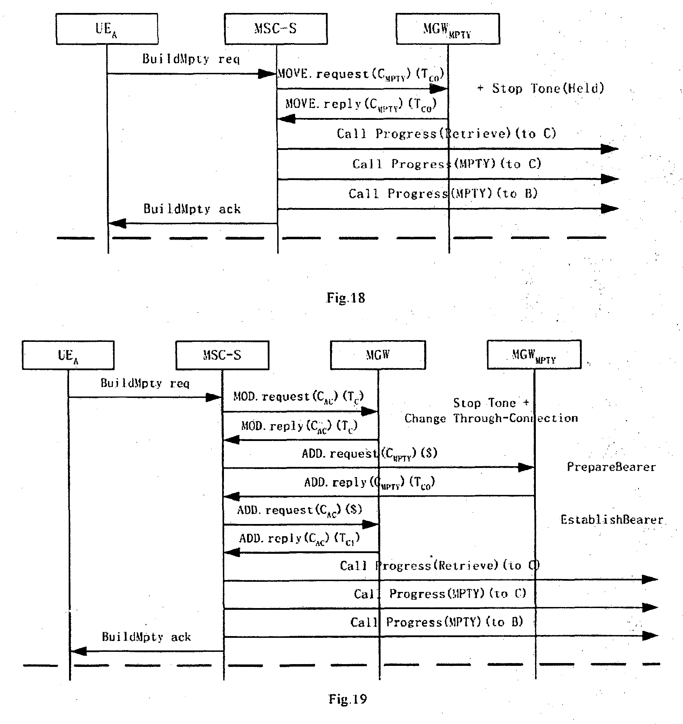

Fig.18 is the time sequence of form II for multi-party conference adding a remote user ( MPTY is in active ) according to network model I. The service flowchart is as follows:

The private call between user A and user C is maintained while the multi-party conference is in active state. The dispatcher requests adding the private call to multi-party conference.

MSC SERVER sends Move command (including request of stopping sending call maintaining tone to remote user C) to MGW_{MPTY} to request MGW_{MPTY} moving terminal T_{CO} from C_{C} to C_{MPTY}. Because T_{CO} is the only terminal in C_{C}, C_{C} will be released after the MOVE operation.

Notifying remote user C that the maintained call has been restored, and has been added to the multi-party conference. Notifying the other remote users in the multi-party conference that a new user has joined in the conference. And at the same time, notifying the dispatcher that the operation for adding the private call to the multi-party conference has been performed successfully.

Fig.19 is the time sequence of form II for multi-party conference adding a remote user ( MPTY is in active ) according to network model I. The service flowchart is as follows:

The private call between user A and user C is maintained while the multi-party conference is in active state. The dispatcher requests adding the private call to multi-party conference.

MSC SERVER sends Modify command to MGW to request MGW stopping sending call maintaining tone to remote user C.

MSC SERVER sends ADD command to MGW_{MPTY} to request MGW_{MPTY} applying a new terminal in C_{MPTY}, that is , T_{C0}.

MSC SERVER sends ADD command to MGW to request MGW applying a new terminal in C_{AC}, that is, T_{C1}.

Notifying remote user C that the maintained call has been restored, and has been added to the multi-party conference. Notifying the other remote users in the multi-party conference that a new user has joined in the conference. And at the same time, notifying the dispatcher that the operation for adding the private call to the multi-party conference has been performed successfully.

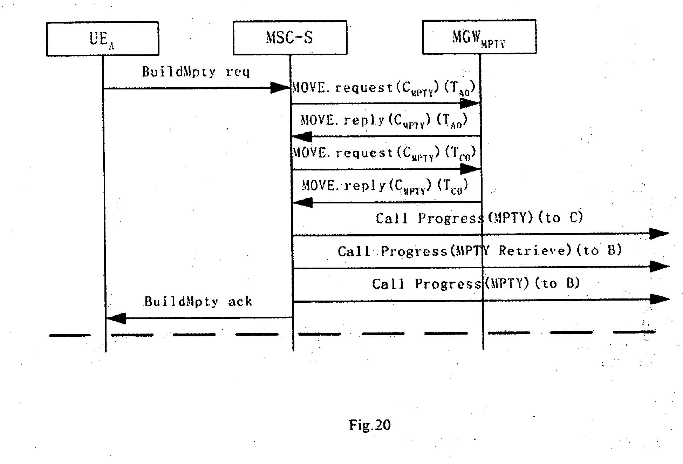

Fig.20 is the time sequence of form I for multi-party conference adding a remote user (MPTY is in Held) according to network model I. The service flowchart is as follows:

There is an active private call between user A and user C while the multi-party conference is maintained. The dispatcher requests adding the private call to the multi-party conference:

MSC SERVER sends MOVE operation to MGW_{MPTY} to request MGW_{MPTY} transferring T_{A0} from C_{C} to C_{MPTY}.

MSC SERVER sends MOVE operation to MGW_{MPTY} to request MGW_{MPTY} transferring T_{C0} from Cc to C_{MPTY.}

Notifying remote user C that the call has been added to the multi-party conference. Notifying the remote users of multi-party conference that the multi-party conference has been restored, and at the same time, a new user has joined in the multi-party conference. And at the same time, notifying the dispatcher that the operation for adding the private call to the multi-party conference has been accomplished successfully.

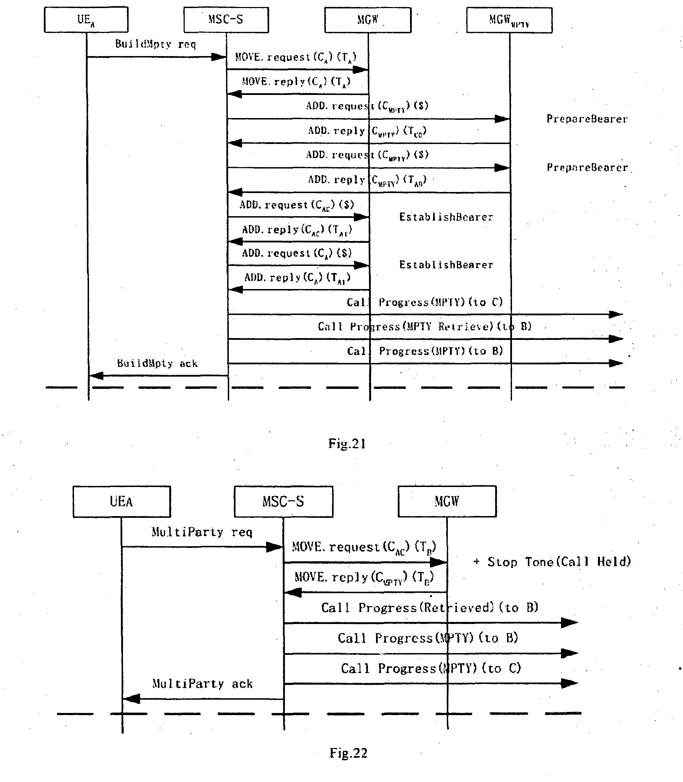

Fig.21 is the time sequence of form II for multi-party conference adding a remote user (MPTY is in Held) according to network model I. The service flowchart is as follows:

There is an active private call between user A and user C while the multi-party conference is maintained. The dispatcher requests adding the private call to the multi-party conference:

MSC SERVER sends MOVE operation to MGW to request MGW transferring T_{A} from C_{AC} to C_{A}.

MSC SERVER sends ADD operation to MGW_{MPTY} to request MGW_{MPTY} adding a new terminal in C_{MPTY}, that is T_{C0}.

MSC SERVER sends ADD operation to MGW_{MPTY} to request MGW_{MPTY} adding a new terminal in C_{MPTY}, that is T_{A0}.

MSC SERVER sends ADD operation to MGW to request MGW adding a new terminal in C_{AC}, that is T_{C1}.

MSC SERVER sends ADD operation to MGW to request MGW adding a new terminal in C_{A}, that is T_{A1}.

Notifying remote user C that the call has been added to the multi-party conference. Notifying the other remote users of multi-party conference that the multi-party conference has been restored, and a new user has joined in the conference. And at the same time, notifying the dispatcher that the operation for adding the private call to the multi-party conference has been performed successfully.

Fig.22 is the time sequence of establishing multi-party conference according to network model II. The service flowchart is as follows:

The call between user A and user B is maintained, the call between user A and user C is in an active state.

User A sends multi-party conference establishing request message to MSC SERVER to request establishing the multi-party conference between user A, B and C.

MSC SERVER sends MOVE operation ( including request of stopping sending call maintaining tone to user B ) to notify MGW to transfer T_{B} to That is C_{MPTY}, for supporting multi-party conference.

After finishing the operation on terminal, notifying remote user B that the maintained call has been restored, and has been added to the multi-party conference. Notifying remote user C that the call has been added to the multi-party conference. Notifying UE_{A} that the multi-party conference has been established successfully.

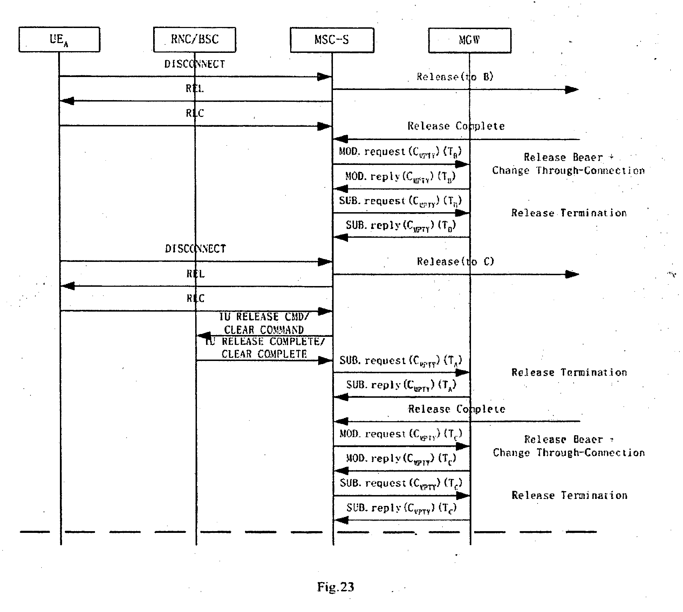

Fig.23 is the time sequence for releasing multi-party conference service according to network model II. The service flowchart is as follows:

User A, B and C perform multi-party conference, the dispatcher user A requests releasing the multi-party conference.

UE_{A} and MSC SERVER finish the release process of access side, because the user has another call, the Iu interface will not be released. And at the same time, notify the remote users that the call has been released. After the remote user B releases the accomplishing signaling and carrying, it returns call release response.

MSC SERVER sends Modify command to MGW to notifying MGW to modify the connection direction of T_{B}, at the same time, to release the related carrying.

MSC SERVER sends Subtract command to MGW to notifying MGW to release terminal T_{B}.

UE_{A} and MSC SERVER finish the release process of access side for the last call, because after the user releasing the call, there is no call service any more, the Iu interface can be released, that is, the release process of Iu interface has to be finished. And at the same time, notify remote users that the call has been released. After Iu interface being released:

MSC SERVER sends Subtract command to MGW to notify MGW to release terminal T_{A}.

After remote user C releasing the accomplishing signaling and carrying, it returns call release response:

MSC SERVER sends Modify command to MGW to notifying MGW to modify the connection direction of T_{C}, and at the same time, to release the related carrying.

MSC SERVER sends Subtract command to MGW to notify MGW to release terminal T_{C}.

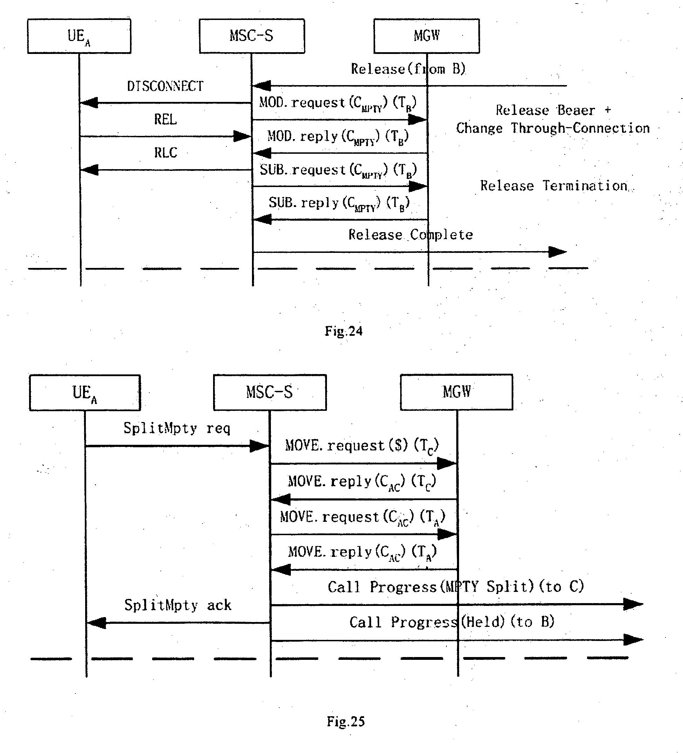

Fig.24 is the time sequence for releasing single call of multi-party conference according to network model II. The service flowchart is as follows:

User A, B and C perform multi-party conference, remote user B notifies that the call has been released, MSC-SERVER finishes the release process of access side of UE, and at the same time, performs the following Mc operation:

MSC SERVER sends Modify command to MGW to notify MGW to modify the connection direction of T_{B}, and at the same time to release the related carrying.

MSC SERVER sends Subtract command to MGW to notify MGW to release the terminal T_{B}.

Notifying remote users that the call of its own side has been released.

Fig.25 is the time sequence for separating a remote user according to network model II. The service flowchart is as the following:

User A and user B perform multi-party conference, the dispatcher requests separating the remote user C, and performs private conversation with user C, while the other users of multi-party conference can continue conference.

MSC SERVER sends MOVE command to MGW to request transferring terminal T_{C} to a new context, MGW returns response, including the newly applied context C_{AC}.

MSC SERVER sends MOVE command to MGW to request transferring terminal T_{A} to context C_{AC}.

Notifying remote user C that the call has been separated, notifying the other remote users of multi-party conference that the conference has been maintained, notifying UE_{A} that the operation of separation has been accomplished successfully.

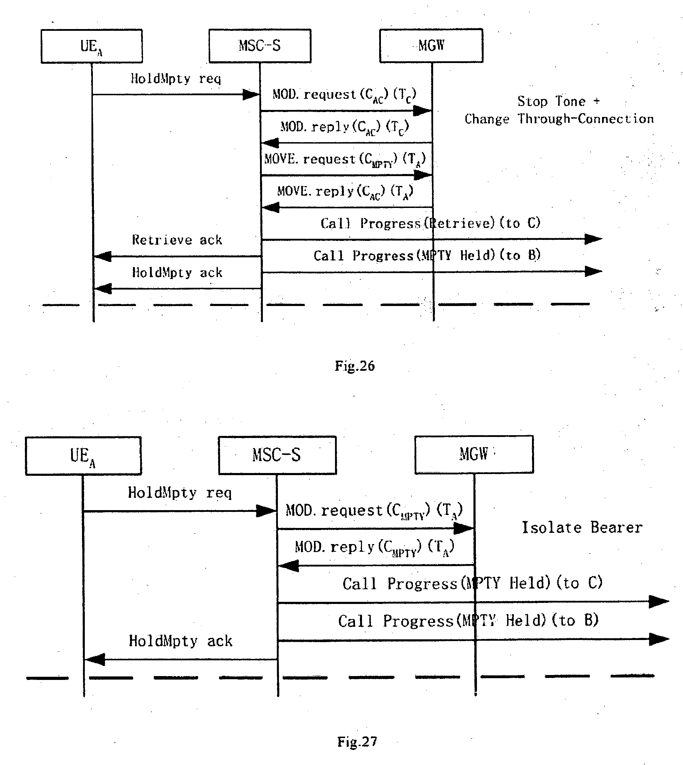

Fig.26 is the time sequence for maintaining multi-party conference (private call existing ) according to network model II. The service flowchart is as follows:

User A and user B perform multi-party conference, while the call between user A and user C is maintained.

MSC SERVER sends Modify command to MGW to notify MGW to stop sending call maintaining tone to remote user B.

MSC SERVER sends MOVE command to MGW to notify MGW to transfer terminal T_{A} from context C_{MPTY} to C_{AC}.

Notifying remote user C that the maintained call has been restored. Notifying the remote user in the multi-party conference that the multi-party conference has been maintained. And at the same time, notifying the dispatcher that the maintained call has been restored, while the multi-party conference has been maintained.

Fig.27 is the time sequence for maintaining multi-party conference (no private call) according to network model II. The service flowchart is as follows:

User A, B and C perform multi-party conference, the dispatcher requests maintaining the multi-party conference.

MSC SERVER sends Modify command to MGW to request MGW disconnecting terminal T_{A} and other terminals of C_{MPTY}.

Notifying remote users of multi-party conference that the multi-party conference has been maintained. And at the same time, notifying the dispatcher that the operation for maintaining multi-party conference has been performed successfully.

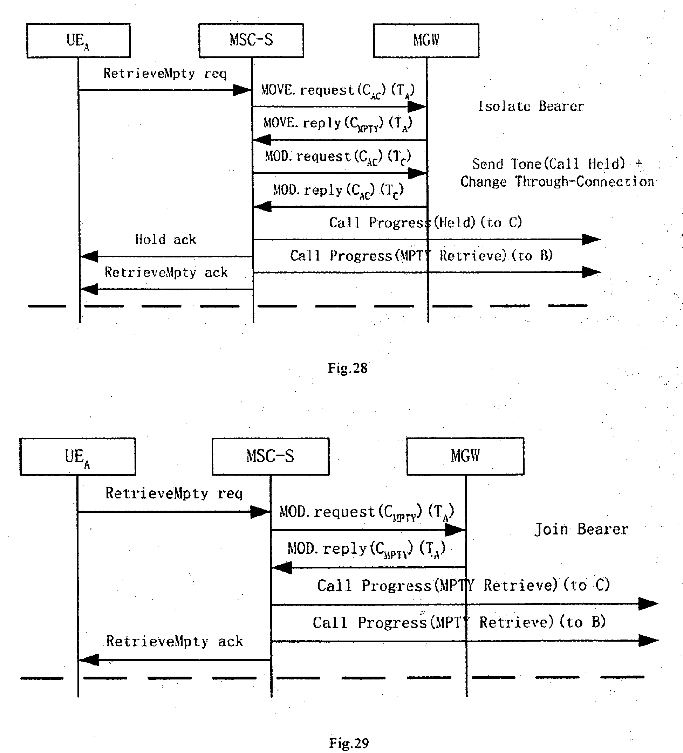

Fig.28 is the time sequence for restoring multi-party conference (private call existing) according to network model II. The service flowchart is as follows:

User A and user B perform multi-party conference, and this multi-party conference is maintained. And at the same time, there is an active call between user A and user C. The dispatcher requests restoring the maintained multi-party conference.

MSC SERVER sends MOVE command to MGW to request MGW transferring T_{A} from C_{AC} to C_{MPTY}.

MSC SERVER sends Modify command to MGW to request MGW sending call maintaining tone to remote user C.

Notifying remote user C that the call has been maintained. Notifying the remote users of multi-party conference that the maintained call has been restored. And at the same time, notifying the dispatcher that the private call with the user C has been maintained, while the originally maintained multi-party conference has been restored.

Fig.29 is the time sequence for restoring multi-party conference (no private call) according to network model II. The service flowchart is as follows:

The multi-party conference between user A, B and C is maintained, the dispatcher requests restoring the multi-party conference.

MSC SERVER sends Modify command to MGW to request MGW connecting T_{A} and other terminals in C_{MPTY} bidirectionally.

Notifying the remote users of multi-conference that the multi-party conference has been restored. And at the same time, notifying the dispatcher that the operation for restoring the multi-party conference has been performed successfully.

Fig.30 is the time sequence for multi-party conference adding a remote user (MPTY is in Active ) according to network model II. The service flowchart is as follows:

The private call between user A and user C is maintained, while the multi-party conference is in an active state. The dispatcher requests adding the private call to the multi-party conference.

MSC SERVER sends MOVE command (including request of stopping sending call maintaining tone to remote user C) to MGW to request MGW transferring terminal T_{C} from C_{AC} to C_{MPTY}. Because T_{C} is the unique terminal in C_{AC}, after finishing the MOVE operation, C_{AC} is released.

Notifying remote user C that the maintained call has been restored, and has be added to the multi-party conference. Notifying the other remote users of multi-party conference that a new user has joined in the conference. And at the same time, notifying the dispatcher that the operation for adding the private call to multi-party conference has been performed successfully.

Fig.31 is the time sequence for multi-party conference adding a remote user (MTPY is in Held) according to network model II. The service flowchart is as follows:

There is an active private call between user A and user C, while the multi-party conference is maintained. The dispatcher requests adding the private call to the multi-party conference:

MSC SERVER sends MOVE operation to MGW to request MGW transfer T_{A} from C_{AC} to C_{MPTY}.

MSC SERVER sends MOVE operation to MGW to request MGW transfer T_{C} from C_{AC} to C_{MPTY}.

Notifying remote user C that the call has been added to the multi-party conference. Notifying the remote users of multi-party conference that the multi-party conference has been restored, and a new user has been added to the multi-party conference. And at the same time, notifying the dispatcher that the operation for adding the private call to the multi-party conference has been performed successfully.

### Industrial applicability

By applying the present invention, it is possible to open multiple standard multi-party conference service processes on Mc interface between MGC media gateway controller and MGW media geteway, such as the establishment, release, maintaining of multi-party conference etc., that is, two fix the message flow on Mc interface when realizing multi-party conference service in a network with NGN network Architecture, therefore, when different manufactures interconnect with each other, the measurability of Mc interface can be guaranteed.

## Claims

1. A method for realizing multi-party conference service in a telecommunication network with NGN network Architecture, **characterized in that** a basic call media gateway, MGW, (102) does not support a multi-party conference bridge, and the method comprises an operation for establishing multi-party conference services when a call between a user A and a user B is maintained, and a call between the user A and a user C is in an active state, comprising the following steps of:
(1) the user A sending a multi-party conference establishment request message to a MSC server (101) to request establishing a multi-party conference between the user A, B and C;
(2) MSC server (101) sending a Modify command to the media gateway (102) to request it stopping sending call maintaining tone to the remote user B;
(3) MSC server (101) sending a Move command to the media gateway (102) to request the media gateway (102) turning a terminal T_{A} from a context C_{AC} to a new context, that is, newly established context CA;
(4) MSC server (101) sending an ADD command to a media gateway (103) supporting the multi-party conference bridge, to request a multi-party media gateway, MGW_{MPTY}, (103) establishing a new context and a new terminal, that is, context C_{MPTY} and terminal T_{A0}; MSC server (101) sending the ADD command to the media gateway (103) supporting the multi-party conference bridge to request a MGW_{MPTY} (103) establishing a new terminal in a context C_{MPTY}, that is, terminal T_{B0}; MSC server (101) sends the ADD command to the media gateway (103) supporting the multi-party conference bridge to request the MGW_{MPTY} (103) establishing a new terminal in the C_{MPTY}, that is, terminal T_{C0};
(5) MSC server (101) sending the ADD command to the media gateway (102) to request the media gateway (102) establishing a new terminal in a context C_{A}, that is, terminal T_{A1};
(6) MSC server (101) sending the ADD command to the media gateway (102) to request the media gateway (102) establishing a new terminal in a context C_{AB}, that is, terminal T_{B1};
(7) MSC server (101) sending the ADD command to the media gateway (102) to request the media gateway (102) establishing a new terminal in a context C_{AC}, that is, terminal T_{C1}; and
(8) after accomplishing the terminal operation, notifying the remote user B that the maintained call has been restored and added to the multi-party conference; notifying the remote user C that the call has been added to the multi-party conference; notifying the user A that the multi-party conference has been established successfully.

2. The method as claimed in claim 1, further comprising an operation for releasing multi-party conference services when at least a user A, a user B and a user C perform the multi-party conference, and the dispatcher user A requests releasing the multi-party conference, comprising the following steps of:
(1) the user A and a MSC server (101) accomplishing a release process of access side, and at the same time, notifying remote users that the call has been released; after the remote user B releasing accomplishing signal and carrying, it returning a call release response;
(2) MSC server (101) sending a Subtract command to a MGW_{MPTY} (103) to request the MGW_{MPTY} (103) releasing a terminal T_{B0};
(3) MSC server (101) sending a Modify command to a MGW (102) to notify the MGW (102) to modify connection direction of a terminal T_{B1}, and at the same time, to release related carrying;
(4) MSC server (101) sending the Subtract command to the MGW (102) to request the MGW (102) releasing the terminal T_{B1};
(5) after the remote user B releasing the accomplishing signal and carrying, it returning the call release response;
(6) MSC server (101) sending the Modify command to the MGW (102) to notify the MGW (102) to modify the connection direction of a terminal T_{B}, and at the same time, to release the related carrying;
(7) MSC server (101) sending the Subtract command to the MGW (102) to notify the MGW (102) to release the terminal T_{B1};
(8) the user A and the MSC server (101) accomplishing the release process of access side for the last call, releasing an Iu interface, and at the same time, notifying the remote users that the call has been released;
(9) MSC server (101) sending the Subtract command to the MGW (102) to notify the MGW (102) to release a terminal T_{A};
(10) MSC server (101) sending the Subtract command to the MGW_{MPTY} (103) to request the MGW_{MPTY} (103) releasing a terminal T_{A0};
(11) MSC server (101) sending the Modify command to the MGW (102) to notify the MGW (102) to modify the connection direction of the T_{A1}, and at the same time, to release the related carrying;
(12) MSC server (101) sending the Subtract command to the MGW (102) to request the MGW (102) releasing the terminal T_{A1};
(13) MSC server (101) sending the Subtract command to the MGW_{MPTY} (103) to request the MGW_{MPTY} (103) releasing a terminal T_{C0};
(14) MSC server (101) sending the Modify command to the MGW (102) to notify the MGW (102) to modify the connection direction of a terminal T_{C1}, and at the same time, to release the related carrying;
(15) MSC server (101) sending the Subtract command to the MGW (102) to request the MGW (102) releasing the terminal T_{C1};
(16) after the remote user C releasing the accomplishing signal and carrying, it returning the call release response;
(17) MSC server (101) sending the Modify command to the MGW (102) to notify the MGW (102) to modify the connection direction of a terminal T_{C}, and at the same time, to release the related carrying; and
(18) MSC server (101) sending the Subtract command to the MGW (102) to notify the MGW (102) to release the terminal T_{C}.

3. The method as claimed in claim 1, further comprising an operation for releasing a single call of a multi-party conference when at least a user A, a user B and a user C perform the multi-party conference, and the remote user B notifies that the call has been released, comprising the following steps of:
(1) MSC server (101) performing a release process with a user access side;
(2) MSC server (101) sending a Subtract command to a MGW_{MPTY} (103) to request the MGW_{MPTY} (103) releasing a terminal T_{C0};
(3) MSC server (101) sending a Modify command to a MGW (102) to notify the MGW (102) to modify connection direction of a terminal T_{C1}, and at the same time, to release related carrying;
(4) MSC server (101) sending the Subtract command to the MGW (102) to request the MGW (102) releasing the terminal T_{C1};
(5) MSC server (101) sending the Modify command to the MGW (102) to notify the MGW (102) to modify the connection direction of the terminal T_{C1}, and at the same time, to release the related carrying;
(6) MSC server (101) sending the Subtract command to the MGW (102) to notify the MGW (102) to release the terminal T_{C}; and
(7) notifying the remote users that the call of a local side is released.

4. The method as claimed in claim 1, further comprising an operation for separating a remote user from a multi-party conference when at least a user A, a user B and a user C perform the multi-party conference, the dispatcher A requests separating the remote user C and performing a private conversion with the user C, while other users in the multi-party conference can continue conversion, comprising the following steps of:
(1) MSC server (101) sending a MOVE command to a MGW_{MPTY} (103) to request the MGW_{MPTY} (103) transferring a terminal T_{C0} to a new context, a MGW (102) returning responses including the newly applied context C_{c};
(2) MSC server (101) sending the MOVE command to the MGW_{MPTY} (103) to request the MGW_{MPTY} (103) transferring a terminal T_{A0} to the context C_{c}; and
(3) notifying the remote user C that the call has been separated, notifying other remote users in the multi-party conference that the multi-party conference has been maintained, and notifying the user A that the separation operation has been accomplished successfully.

5. The method as claimed in claim 1, further comprising an operation for separating a remote user from a multi-party conference when at least a user A, a user B and a user C perform the multi-party conference, the dispatcher A requests separating the remote user C and performing a private conversion with the user C, while other users in the multi-party conference can continue conversion, comprising the following steps of:
(1) MSC server (101) sending a Subtract command to a MGW_{MPTY} (103) to request the MGW_{MPTY} (103) releasing a terminal T_{C0};
(2) MSC server (101) sending a Modify command to a MGW (102) to notify the MGW (102) to modify connection direction of a terminalT_{C1}, and at the same time, to release related carrying;
(3) MSC server (101) sending the Subtract command to the MGW (102) to request the MGW (102) releasing the terminal T_{C1};
(4) MSC server (101) sending a MOVE command to the MGW (102) to request the MGW (102) transferring a terminal T_{A0} to a context C_{AC}; and
(5) notifying the remote user C that the call has been separated, notifying other remote users in the multi-party conference that the multi-party conference has been maintained, and notifying the user A that the separation operation has been accomplished successfully.

6. the method as claimed in claim 1, further comprising an operation for maintaining conference when there is a private call in a multi-party conference, in which at least a user A, a user B and a user C perform the multi-party conference, the user A and the user B perform the multi-party conference, while the call between the user A and the user C is maintained, comprising the following steps of:
(1) MSC server (101) sending a Modify command to a MGW_{MPTY} (103) to notify the MGW_{MPTY} (103) to stop sending call maintaining tone to the remote user C;
(2) MSC server (101) sending a MOVE command to the MGW_{MPTY} (103) to notify the MGW (102) to transfer a terminal T_{A0} from a context C_{MPTY} to a context C_{C}; and
(3) notifying the remote user C that the call maintained has been restored, notifying other remote users in the multi-party conference that the multi-party conference has been maintained, and at the same time, notifying the dispatcher that the maintained call has been restored, therefore the multi-party conference has been maintained.

7. The method as claimed in claim 1, further comprising an operation for maintaining conference when there is a private call in a multi-party conference, in which at least a user A, a user B and a user C perform the multi-party conference, the user A and a user B perform the multi-party conference, while the call between the user A and the user C is maintained, comprising the following steps of:
(1) MSC server (101) sending a Modify command to a MGW (102) to notify the MGW (102) to stop sending call maintaining tone to the remote user C;
(2) MSC server (101) sending a MOVE command to the MGW (102) to notify the MGW (102) to transfer a terminal T_{A} from a context C_{A} to a context C_{AC}; and
(3) notifying the remote user C that the maintained call has been restored, notifying the remote users in the multi-party conference that the multi-party conference has been maintained, and at the same time, notifying the dispatcher that the maintained call has been restored, therefore the multi-party conference has been maintained.

8. The method as claimed in claim 1, further comprising an operation for maintaining conference when there is no private call in a multi-party conference, in which at least a user A, a user B and a user C perform the multi-party conference, and a dispatcher A requests maintaining the multi-party conference, comprising the following steps of:
(1) MSC server (101) sending a Modify command to a MGW (102) to request the MGW (102) isolating a terminal T_{A} and other terminals in a context C_{A}; and
(2) notifying the remote users of the multi-party conference that the multi-party conference has been maintained, and at the same time, notifying the dispatcher that the operation for maintaining the multi-party conference has been performed successfully.

9. The method as claimed in claim 1, further comprising an operation for maintaining conference when there is no private call in a multi-party conference, in which at least a user A, a user B and a user C perform the multi-party conference, and a dispatcher A requests maintaining the multi-party conference, comprising the following steps of:
(1) MSC server (101) sending a Modify command to the MGW (102) to request the MGW (102) isolating a terminal T_{A0} and other terminals in a context C_{MPTY}; and
(2) notifying the remote users of the multi-party conference that the multi-party conference has been maintained, and at the same time, notifying the dispatcher that the operation for maintaining the multi-party conference has been performed successfully.

10. The method as claimed in claim 1, further comprising an operation for maintaining conference when there is no private call in a multi-party conference, in which at least a user A, a user B and a user C perform the multi-party conference, and a dispatcher A requests maintaining the multi-party conference, comprising the following steps of:
(1) MSC server (101) sending a Modify command to a MGW (102) to request the MGW (102) changing outside connection of a terminal T_{A1} into an inactive state; and
(2) notifying the remote users of the multi-party conference that the multi-party conference has been maintained, and at the same time, notifying the dispatcher that the operation for maintaining the multi-party conference has been performed successfully.

11. The method as claimed in claim 1, further comprising an operation for restoring conference when there is a private call in a multi-party conference, in which a user A and a user B perform the multi-party conference which is maintained, and at the same time, there is an active call between the user A and a user C, and a dispatcher requests restoring the maintained multi-party conference, comprising the following steps of:
(1) MSC server (101) sending a MOVE command to a MGW_{MPTY} (103) to request the MGW_{MPTY} (103) transferring a terminal T_{A0} from a context C_{C} to a context C_{MPTY};
(2) MSC server (101) sending the Modify command to a MGW_{MPTY} (103) to request the MGW_{MPTY} (103) sending call maintaining tone to the remote user C; and
(3) notifying the remote user C that the call has been maintained, notifying other remote users in the multi-party conference that the maintained call has been restored, and at the same time, notifying the dispatcher that the private call with the user C has been maintained, therefore, the originally maintained multi-party conference has been restored.

12. The method as claimed in claim 1, further comprising an operation for restoring conference when there is a private call in a multi-party conference, in which a user A and a user B perform the multi-party conference which is maintained, and at the same time, there is an active call between the user A and a user C, and a dispatcher requests restoring the maintained multi-party conference, comprising the following steps of:
(1) MSC server (101) sending a MOVE command to a MGW (102) to request the MGW (102) transferring a terminal T_{A} from a context C_{AC} to a context C_{A};
(2) MSC server (101) sending a Modify command to the MGW (102) to request the MGW (102) sending call maintaining tone to the remote user C; and
(3) notifying the remote user C that the call has been maintained, notifying other remote users in the multi-party conference that the maintained user has been restored, and at the same time, notifying the dispatcher that the private call with the user C has been maintained, therefore, the originally maintained multi-party conference has been restored.

13. The method as claimed in claim 1, further comprising an operation for restoring conference when there is no private call in a multi-party conference, in which the multi-party conference between a user A, a user B and a user C has been maintained, and a dispatcher requests restoring the multi-party conference, comprising the following steps of:
(1) MSC server (101) sending a Modify command to a MGW (102) to request the MGW (102) connecting a terminal T_{A} and other terminals in a context C_{A} bidirectionally; and
(2) notifying the remote users of the multi-party conference that the multi-party conference has been restored, and at the same time, notifying the dispatcher that the operation for restoring the multi-party conference has been performed successfully.

14. The method as claimed in claim 1, further comprising an operation for restoring conference when there is no private call in a multi-party conference, in which the multi-party conference between a user A, a user B and a user C has been maintained; and a dispatcher requests restoring the multi-party conference, comprising the following steps of:
(1) MSC server (101) sending a Modify command to a MGW_{MPTY} (103) to request the MGW_{MPTY} (103) connecting a terminal T_{A0} and other terminals in a context C_{MPTY} bidirectionally; and
(2) notifying the remote users of the multi-party conference that the multi-party conference has been restored, and at the same time, notifying the dispatcher that the operation for restoring the multi-party conference has been performed successfully.

15. The method as claimed in claim 1, further comprising an operation for restoring conference when there is no private call in a multi-party conference, in which the multi-party conference between a user A, a user B and a user C has been maintained, and a dispatcher requests restoring the multi-party conference, comprising the following steps of:
(1) MSC server (101) sending a Modify command to a MGW (102) to request the MGW (102) changing outside connection of a terminal T_{A1} into a transmitting /receiving state; and
(2) notifying the remote users of the multi-party conference that the multi-party conference has been restored, and at the same time, notifying the dispatcher that the operation for restoring the multi-party conference has been performed successfully.

16. The method as claimed in claim 1, further comprising an operation for adding a remote user when a multi-party MTPY in a multi-party conference is in an active state, in which a private call between a user A and a user C has been maintained, while the multi-party conference is in an active state, and a dispatcher requests adding the private call to the multi-party conference, comprising the following steps of:
(1) MSC server (101) sending a MOVE command, including stopping sending call maintaining tone to the remote user C, to a MGW_{MPTY} (103) to request the MGW_{MPTY} (103) transferring terminal a terminal T_{C0} from a context C_{C} to a context C_{MPTY}; and
(2) notifying the remote user C that the maintained call has been restored and added to the multi-party conference, notifying other remote users in the multi-party conference that a new user has been added, and at the same time, notifying the dispatcher that the operation for adding the private call to the multi-party conference has been performed successfully.

17. The method as claimed in claim 1, further comprising an operation for adding a remote user when a multi-party MTPY in a multi-party conference is in an active state, in which a private call between a user A and a user C has been maintained, while the multi-party conference is in an active state, and a dispatcher requests adding the private call to the multi-party conference, comprising the following steps of:
(1) MSC server (101) sending a Modify command to a MGW (102) to request the MGW (102) stopping sending call maintain tone to the remote user C;
(2) MSC server (101) sending an ADD command to a MGW_{MPTY} (103) to request the MGW_{MPTY} (103) applying a new terminal T_{C0} in a context C_{MPTY};
(3) MSC server (101) sending the ADD command to the MGW (102) to request the MGW (102) applying a new terminal T_{C1} in a context C_{AC}; and
(4) notifying the remote user C that the maintained call has been restored and added to the multi-party conference, notifying other remote users in the multi-party conference that a new user has been added to the conference, and at the same time, notifying the dispatcher that the operation for adding the private call to the multi-party conference has been performed successfully.

18. The method as claimed in claim 1, further comprising an operation for adding a remote user when a multi-party MTPY in a multi-party conference is in an maintaining state, in which there is an active private call between a user A and a user C, while the multi-party conference is maintained, and a dispatcher requests adding the private call to the multi-party conference, comprising the following steps of:
(1) MSC server (101) sending a MOVE command to a MGW_{MPTY} (103) to request the MGW_{MPTY} (103) transferring a terminal T_{A0} from a context C_{C} to a context C_{MPTY};
(2) MSC server (101) sending the MOVE command to the MGW_{MPTY} (103) to request the MGW_{MPTY} (103) transferring a terminal T_{C0} from the C_{C} to the C_{MPTY}; and
(3) notifying the remote user C that the call has been added to the multi-party conference, notifying other remote users in the multi-party conference that the multi-party conference has been restored, and a new user has been added to the multi-party conference, and at the same time, notifying the dispatcher that the operation for adding the private call to the multi-party conference has been performed successfully.

19. The method as claimed in claim 1, further comprising an operation for adding a remote user when a multi-party MTPY in a multi-party conference is in an maintaining state, in which there is an active private call between a user A and a user C, while the multi-party conference is maintained, and a dispatcher requests adding the private call to the multi-party conference, comprising the following steps of:
(1) MSC server (101) sending a MOVE command to a MGW (102) to request the MGW (102) transferring a terminal T_{A} from a context C_{AC} to a context C_{A};
(2) MSC server (101) sending an ADD command to a MGW_{MPTY} (103) to request the MGW_{MPTY} (103) adding a new terminal in a context C_{MPTY}, that is, T_{C0};
(3) MSC server (101) sending the ADD command to the MGW (102) to request the MGW (102) adding a new terminal in the C_{AC}, that is, T_{C1}; and
(4) notifying the remote user C that the call has been added to the multi-party conference, notifying other remote users in the multi-party conference that the multi-party conference has been restored, and a new user has been added to the conference, and at the same time, notifying the dispatcher that the operation for adding the private call to the multi-party conference has been performed successfully.

## Patentansprüche

1. Verfahren zum Implementieren eines Konferenzdienstes mit mehreren Teilnehmern in einem Telekommunikations-Netzwerk mit NGN-Netzarchitektur, **dadurch gekennzeichnet, dass** ein grundlegendes Rufmedien-Gateway MGW (102) eine Konferenzbrücke mit mehreren Teilnehmern nicht unterstützt und das Verfahren einen Betriebsschritt zum Aufbau von Konferenzdiensten mit mehreren Teilnehmern in dem Fall umfasst, in dem ein Anruf zwischen einem Teilnehmer A und einem Teilnehmer B aufrechterhalten wird und ein Anruf zwischen dem Teilnehmer A und einem Teilnehmer C sich in einem aktiven Zustand befindet, wobei es die folgenden Schritte umfasst:
(1) der Teilnehmer A sendet eine Meldung zur Anforderung des Aufbaus einer Konferenz mit mehreren Teilnehmern an einen MSC-Server (101), um den Aufbau einer Konferenz mit mehreren Teilnehmern zwischen den Teilnehmern A, B und C anzufordern;
(2) der MSC-Server (101) sendet einen Änderungsbefehl Modify an das Medien-Gateway (102), um es aufzufordern, die Aussendung eines Rufhaltetons an den externen Teilnehmer B einzustellen;
(3) der MSC-Server (101) sendet einen MOVE-Befehl an das Medien-Gateway (102), um das Medien-Gateway (102) aufzufordern, ein Endgerät T_{A} aus einem Zusammenhang C_{AC} zu einem neuen Zusammenhang umzuschalten, nämlich den neu erstellten Zusammenhang C_{A};
(4) der MSC-Server (101) sendet einen Zuschaltbefehl ADD An ein Medien-Gateway (103), welches die Konferenzbrücke mit mehreren Teilnehmern unterstützt, um ein Medien-Gateway mit mehreren Teilnehmern MGW_{MPTY} (103) aufzufordern, einen neuen Zusammenhang und ein neues Endgerät einzurichten, nämlich den Zusammenhang C_{MPTY} und das Endgerät T_{A0}, wobei der MSC-Server (101) den Zuschaltbefehl ADD an das Medien-Gateway (103) sendet, welches die Konferenzbrücke mit mehreren Teilnehmern unterstützt, um ein Medien-Gateway mit mehreren Teilnehmern MGW_{MPTY} (103) aufzufordern, ein neues Endgerät in einem Zusammenhang C_{MPTY} einzurichten, nämlich das Endgerät T_{B0}, und der MSC-Server (101) sendet den Zuschalt-Befehl ADD an das Medien-Gateway (103), welches die Konferenzbrücke mit mehreren Teilnehmern unterstützt, um das Medien-Gateway MGW_{MPTY} (103) (103) aufzufordern, ein neues Endgerät in dem Zusammenhang C_{MPTY}, nämlich das Endgerät T_{C0}, einzurichten;
(5) der MSC-Server (101) sendet den Zuschaltbefehl ADD an das Medien-Gateway (102), um das Medien-Gateway (102) aufzufordern, ein neues Endgerät in einem Zusammenhang C_{A} einzurichten, nämlich das Endgerät T_{A1};
(6) der MSC-Server (101) sendet den Zuschaltbefehl ADD an das Medien-Gateway (102), um das Medien-Gateway (102) aufzufordern, ein neues Endgerät in einem Zusammenhang C_{AB} einzurichten, nämlich das Endgerät T_{B1};
(7) der MSC-Server (101) sendet den Zuschaltbefehl ADD an das Medien-Gateway (102), um das Medien-Gateway (102) aufzufordern, ein neues Endgerät in einem Zusammenhang C_{AC} einzurichten, nämlich das Endgerät T_{C1}; und
(8) nach Abschluss des Arbeitsschritts mit den Endgeräten wird der externe Teilnehmer B benachrichtigt, dass der gehaltene Anruf wieder hergestellt und in die Konferenz mit mehreren Teilnehmern zugeschaltet wurde, wobei der externe Teilnehmer C benachrichtigt wird, dass der Anruf der Konferenz mit mehreren Teilnehmern zugeschaltet wurde, und wobei der Teilnehmer A benachrichtigt wird, dass die Konferenz mit mehreren Teilnehmern erfolgreich eingerichtet wurde.

2. Verfahren nach Anspruch 1, welches des Weiteren einen Betriebsschritt zur Freigabe von Konferenzdiensten mit mehreren Teilnehmern in dem Fall umfasst, in dem mindestens ein Teilnehmer A, ein Teilnehmer B und ein Teilnehmer C an der Konferenz mit mehreren Teilnehmern beteiligt sind und der die Nachricht absendende Teilnehmer A die Freigabe der Konferenz mit mehreren Teilnehmern anfordert, und welches die folgenden Arbeitsschritte umfasst:
(1) der Teilnehmer A und ein MSC-Server (101) führen einen Freigabevorgang auf der Zugangsseite durch und benachrichtigen gleichzeitig externe Teilnehmer, dass der Anruf freigegeben wurde, und nach der Freigabe eines Durchführungs- und Weiterleitungssignals durch den externen Teilnehmer B wird eine Anruffreigabe-Antwort durch letzteren zurückgesendet;
(2) der MSC-Server (101) sendet einen Subtraktionsbefehl an ein MGW_{MPTY} (103), um das MGW_{MPTY} (103) aufzufordern, ein Endgerät T_{BO} freizugeben;
(3) der MSC-Server (101) sendet einen Änderungsbefehl Modify an ein MGW (102), um das MGW (102) zu benachrichtigen, dass die Verbindungsrichtung eines Endgeräts TB₁ zu ändern ist und gleichzeitig die damit zusammenhängende Weiterleitung freizugeben ist;
(4) der MSC-Server (101) sendet den Subtraktionsbefehl an das MGW (102), um das MGW (102) aufzufordern, das Endgerät T_{B} freizugeben;
(5) nachdem der externe Teilnehmer B das Durchführungs- und Weiterleitungssignal freigegeben hat, wird die Anruffreigabe-Antwort zurückgesendet;
(6) der MSC-Server (101) sendet den Änderungsbefehl Modify an das MGW (102), um das MGW (102) über die Modifizierung der Verbindungsrichtung eines Endgeräts T_{B} zu benachrichtigen und gleichzeitig die damit zusammenhängende Weiterleitung freizugeben;
(7) der MSC-Server (101) sendet den Subtraktionsbefehl an ein MGW (102), um das MGW (102) aufzufordern, ein Endgerät T_{B1} freizugeben;
(8) der Teilnehmer A und der MSC-Server (101) führen einen Freigabevorgang auf der Zugangsseite für den letzten Anruf durch und wobei sie eine Iu-Schnittstelle freigeben und gleichzeitig die externen Teilnehmer benachrichtigen, dass der Anruf freigegeben wurde;
(9) der MSC-Server (101) sendet den Subtraktionsbefehl an das MGW (102), um das MGW (102) zu benachrichtigen, dass ein Endgerät T_{A} freizugeben ist;
(10) der MSC-Server (101) sendet den Subtraktionsbefehl an das MGW_{MPTY} (103), um das MGW_{MPTY} (103) aufzufordern, ein Endgerät T_{A0} freizugeben;
(11) der MSC-Server (101) sendet den Änderungsbefehl Modify an das MGW (102), um das MGW (102) zu benachrichtigen, dass die Verbindungsrichtung des T_{A1} zu ändern ist und gleichzeitig die damit zusammenhängende Weiterleitung freizugeben ist;
(12) der MSC-Server (101) sendet den Subtraktionsbefehl an das MGW (102), um das MGW (102) aufzufordern, das Endgerät T_{A1} freizugeben;
(13) der MSC-Server (101) sendet den Subtraktionsbefehl an das MGW_{MPTY} (103), um das MGW_{MPTY} (103) aufzufordern, ein Endgerät T_{C0} freizugeben;
(14) der MSC-Server (101) sendet den Änderungsbefehl Modify an das MGW (102), um das MGW (102) zu benachrichtigen, dass die Verbindungsrichtung eines Endgeräts T_{C1} zu ändern ist und gleichzeitig die damit zusammenhängende Weiterleitung freizugeben ist;
(15) der MSC-Server (101) sendet den Subtraktionsbefehl an das MGW (102), um das MGW (102) aufzufordern, das Endgerät T_{C1} freizugeben;
(16) nachdem der externe Teilnehmer B das Durchführungs- und Weiterleitungssignal freigegeben hat, wird die Anruffreigabe-Antwort zurückgesendet;
(17) der MSC-Server (101) sendet den Änderungsbefehl Modify an das MGW (102), um das MGW (102) zu benachrichtigen, dass die Verbindungsrichtung eines Endgeräts T_{C} zu ändern ist und gleichzeitig die damit zusammenhängende Weiterleitung freizugeben ist; und
(18) der MSC-Server (101) sendet den Subtraktionsbefehl an das MGW (102), um das MGW (102) aufzufordern, das Endgerät T_{C} freizugeben.

3. Verfahren nach Anspruch 1, welches des Weiteren einen Betriebsschritt zur Freigabe eines Einzelanrufs in einer Konferenz mit mehreren Teilnehmern in dem Fall umfasst, in dem mindestens ein Teilnehmer A, ein Teilnehmer B und ein Teilnehmer C an der Konferenz mit mehreren Teilnehmern beteiligt sind und der externe Teilnehmer B meldet, dass der Anruf freigegeben wurde, und welches die folgenden Arbeitsschritte umfasst:
(1) der MSC-Server (101) führt einen Freigabe-Vorgang mit einer Teilnehmer-Zugangsseite durch;
(2) der MSC-Server (101) der MSC-Server (101) sendet einen Subtraktionsbefehl an das MGW_{mpty} (103), um das MGW_{mpty} (103) aufzufordern, ein Endgerät T_{C0} freizugeben;
(3) der MSC-Server (101) sendet einen Änderungsbefehl Modify an ein MGW (102), um das MGW (102) zu benachrichtigen, dass die Verbindungsrichtung eines Endgeräts T_{C1} zu ändern ist und gleichzeitig die damit zusammenhängende Weiterleitung freizugeben ist;
(4) der MSC-Server (101) sendet den Subtraktionsbefehl an das MGW (102), um das MGW (102) aufzufordern, das Endgerät T_{C1} freizugeben;
(5) der MSC-Server (101) sendet den Änderungsbefehl Modify an das MGW (102), um das MGW (102) zu benachrichtigen, dass die Verbindungsrichtung eines Endgeräts T_{C1} zu ändern ist und gleichzeitig die damit zusammenhängende Weiterleitung freizugeben ist;
(6) der MSC-Server (101) sendet den Subtraktionsbefehl an das MGW (102), um das MGW (102) zu benachrichtigen, das das Endgerät T_{C} freigegeben wird; und
(7) die externen Teilnehmer werden benachrichtigt, dass der Anruf einer lokalen Seite freigegeben ist.

4. Verfahren nach Anspruch 1, welches des Weiteren einen Betriebsschritt zur Trennung eines externen Teilnehmers von einer Konferenz mit mehreren Teilnehmern, wenn mindestens ein Teilnehmer A, ein Teilnehmer B und ein Teilnehmer C an der Konferenz mit mehreren Teilnehmern beteiligt sind, wobei der absendende Teilnehmer A die Trennung des externen Teilnehmers C anfordert und ein privates Gespräch mit dem Teilnehmer C vornimmt, während andere Teilnehmer an der Konferenz mit mehreren Teilnehmern das Gespräch weiterführen können, und welches die folgenden Arbeitsschritte umfasst:
(1) der MSC-Server (101) sendet einen MOVE-Befehl an ein MGW_{MPTY} (103), um das MGW_{MPTY} (103) aufzufordern, ein Endgerät T_{C0} in einen neuen Zusammenhang C_{AC} zu übertragen, wobei ein MGW (102) Antworten, einschließlich des neu angelegten Zusammenhangs C_{C}, zurücksendet;
(2) der MSC-Server (101) sendet den MOVE-Befehl an das MGW_{MPTY} (103), um das MGW_{MPTY} (103) aufzufordern, dass Endgerät T_{A0} in den Zusammenhang C_{C} zu übertragen;
(3) der externe Teilnehmer C wird benachrichtigt, dass der Anruf abgetrennt wurde, die anderen externen Teilnehmer an der Konferenz mit mehreren Teilnehmern werden benachrichtigt, dass die Konferenz mit mehreren Teilnehmern aufrechterhalten wurde und der Teilnehmer A wird benachrichtigt, dass der Abtrennvorgang erfolgreich ausgeführt wurde.

5. Verfahren nach Anspruch 1, welches des Weiteren einen Betriebsschritt zur Trennung eines externen Teilnehmers von einer Konferenz mit mehreren Teilnehmern, wenn mindestens ein Teilnehmer A, ein Teilnehmer B und ein Teilnehmer C an der Konferenz mit mehreren Teilnehmern beteiligt sind, wobei der absendende Teilnehmer A die Trennung des externen Teilnehmers C anfordert und ein privates Gespräch mit dem Teilnehmer C vornimmt, während andere Teilnehmer an der Konferenz mit mehreren Teilnehmern das Gespräch weiterführen können, und welches die folgenden Arbeitsschritte umfasst:
(1) der MSC-Server (101) sendet einen Subtraktionsbefehl an ein MGW_{MPTY} (103), um das MGW_{MPTY} (103) aufzufordern, ein Endgerät T_{C0} freizugeben;
(2) der MSC-Server sendet einen Änderungsbefehl Modify an ein MGW (102), um das MGW (102) zu benachrichtigen, dass die Verbindungsrichtung eines Endgeräts T_{C1} zu ändern ist und um gleichzeitig die damit zusammenhängende Weiterleitung freizugeben;
(3) der MSC-Server (101) sendet den Subtraktionsbefehl an das MGW (102), um das MGW (102) zur Freigabe des Endgeräts T_{C1} aufzufordern;
(4) der MSC-Server (101) sendet einen MOVE-Befehl an das MGW (102), um das MGW (102) aufzufordern, ein Endgerät T_{A0} in einen Zusammenhang C_{AC} zu übertragen; und
(5) der externe Teilnehmer wird benachrichtigt, dass der Anruf abgetrennt wurde, andere externe Teilnehmer an der Konferenz mit mehreren Teilnehmern werden benachrichtigt, dass die Konferenz mit mehreren Teilnehmern aufrechterhalten wurde, und der Teilnehmer A wird benachrichtigt, dass der Abtrennvorgang erfolgreich ausgeführt wurde.

6. Verfahren nach Anspruch 1, welches des Weiteren einen Betriebsschritt zur Aufrechterhaltung einer Konferenz in dem Fall umfasst, in dem ein Privatanruf bei einer Konferenz mit mehreren Teilnehmern vorliegt, bei welchem mindestens ein Teilnehmer A, ein Teilnehmer B und ein Teilnehmer an der Konferenz mit mehreren Teilnehmern beteiligt sind, wobei der Teilnehmer A und der Teilnehmer B die Konferenz mit mehreren Teilnehmern führen, während der Anruf zwischen dem Teilnehmer A und dem Teilnehmer C gehalten wird, wobei das Verfahren die folgenden Schritte umfasst:
(1) der MSC-Server sendet einen Änderungsbefehl Modify an ein MGW (102), um das MGW (102) zu benachrichtigen, dass die Verbindungsrichtung eines Endgeräts T_{C1} zu ändern ist und um gleichzeitig die damit zusammenhängende Weiterleitung freizugeben;
(2) der MSC-Server (101) sendet einen MOVE-Befehl an das MGW_{MPTY} (103), um das MGW (102) zu benachrichtigen, dass ein Endgerät T_{A0} aus einem Zusammenhang C_{MPTY} in einen Zusammenhang C_{C} übertragen wurde; und
(3) der externe Teilnehmer C wird benachrichtigt, dass der gehaltene Anruf wieder hergestellt wurde, die anderen externen Teilnehmer an der Konferenz mit mehreren Teilnehmern werden benachrichtigt, dass die Konferenz mit mehreren Teilnehmern aufrechterhalten wurde und gleichzeitig wird der absendende Teilnehmer benachrichtigt, dass der gehaltene Anruf wieder hergestellt und deshalb die Konferenz mit mehreren Teilnehmern beibehalten wurde.

7. Verfahren nach Anspruch 1, welches des Weiteren einen Betriebsschritt zur Aufrechterhaltung einer Konferenz in dem Fall umfasst, in dem ein Privatanruf bei einer Konferenz mit mehreren Teilnehmern vorliegt, bei welchem mindestens ein Teilnehmer A, ein Teilnehmer B und ein Teilnehmer an der Konferenz mit mehreren Teilnehmern beteiligt sind, wobei der Teilnehmer A und der Teilnehmer B die Konferenz mit mehreren Teilnehmern führen, während der Anruf zwischen dem Teilnehmer A und dem Teilnehmer C gehalten wird, wobei das Verfahren die folgenden Schritte umfasst:
(1) der MSC-Server sendet einen Änderungsbefehl Modify an ein MGW (102), um das MGW (102) zu benachrichtigen, dass die Absendung eines Anrufhaltetons an den externen Teilnehmer C einzustellen ist;
(2) der MSC-Server (101) sendet einen MOVE-Befehl an das MGW (102), um das MGW (102) zu benachrichtigen, dass ein Endgerät T_{A} aus einem Zusammenhang C_{A} in einen Zusammenhang C_{AC} übertragen wurde; und
(3) der externe Teilnehmer C wird benachrichtigt, dass der gehaltene Anruf wieder hergestellt wurde, die anderen externen Teilnehmer an der Konferenz mit mehreren Teilnehmern werden benachrichtigt, dass die Konferenz mit mehreren Teilnehmern aufrechterhalten wurde und gleichzeitig wird der absendende Teilnehmer benachrichtigt, dass der gehaltene Anruf wieder hergestellt und deshalb die Konferenz mit mehreren Teilnehmern beibehalten wurde.

8. Verfahren nach Anspruch 1, welches des Weiteren einen Betriebsschritt zur Aufrechterhaltung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind, kein privater Anruf vorliegt und ein absendender Teilnehmer A die Aufrechterhaltung der Konferenz mit mehreren Teilnehmern anfordert, und welches die folgenden Arbeitsschritte umfasst:
(1) der MSC-Server sendet einen Änderungsbefehl Modify an ein MGW (102), um das MGW (102) aufzufordern, ein Endgerät T_{A} und andere Endgeräte in einem Zusammenhang C_{A} zu isolieren; und
(2) die externen Teilnehmer an der Konferenz mit mehreren Teilnehmern werden benachrichtigt, dass die Konferenz mit mehreren Teilnehmern aufrechterhalten wurde, und gleichzeitig wird der absendende Teilnehmer benachrichtigt, dass der Arbeitsgang zur Aufrechterhaltung der Konferenz mit mehreren Teilnehmern erfolgreich durchgeführt wurde.

9. Verfahren nach Anspruch 1, welches des Weiteren einen Betriebsschritt zur Aufrechterhaltung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind, kein privater Anruf vorliegt und ein absendender Teilnehmer A die Aufrechterhaltung der Konferenz mit mehreren Teilnehmern anfordert, und welches die folgenden Arbeitsschritte umfasst:
(1) der MSC-Server sendet einen Änderungsbefehl Modify an ein MGW (102), um das MGW (102) aufzufordern, ein Endgerät T_{A0} und andere Endgeräte in einem Zusammenhang C_{MPTY} zu isolieren; und
(2) die externen Teilnehmer an der Konferenz mit mehreren Teilnehmern werden benachrichtigt, dass die Konferenz mit mehreren Teilnehmern aufrechterhalten wurde, und gleichzeitig wird der absendende Teilnehmer benachrichtigt, dass der Arbeitsgang zur Aufrechterhaltung der Konferenz mit mehreren Teilnehmern erfolgreich durchgeführt wurde.

10. Verfahren nach Anspruch 1, welches des Weiteren einen Betriebsschritt zur Aufrechterhaltung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind, kein privater Anruf vorliegt und ein absendender Teilnehmer A die Aufrechterhaltung der Konferenz mit mehreren Teilnehmern anfordert, und welches die folgenden Arbeitsschritte umfasst:
(1) der MSC-Server sendet einen Änderungsbefehl Modify an ein MGW (102), um das MGW (102) aufzufordern, die Verbindung eines Endgeräts T_{A1} nach außen in einen inaktiven Zustand zu verändern; und
(2) die externen Teilnehmer an der Konferenz mit mehreren Teilnehmern werden benachrichtigt, dass die Konferenz mit mehreren Teilnehmern aufrechterhalten wurde, und gleichzeitig wird der absendende Teilnehmer benachrichtigt, dass der Arbeitsgang zur Aufrechterhaltung der Konferenz mit mehreren Teilnehmern erfolgreich durchgeführt wurde.

11. Verfahren nach Anspruch 1, welches des Weiteren einen Betriebsschritt zur Wiederherstellung einer Konferenz in dem Fall umfasst, in dem bei einer Konferenz mit mehreren Teilnehmern, wobei mindestens ein Teilnehmer A und ein Teilnehmer B an der Konferenz mit mehreren Teilnehmern beteiligt sind, die aufrechterhalten wird, ein privater Anruf vorliegt und gleichzeitig zwischen dem Teilnehmer A und einem Teilnehmer C ein aktiver Anruf vorliegt, und ein absendender Teilnehmer die Wiederherstellung der aufrechterhaltenen Konferenz mit mehreren Teilnehmern anfordert, und welches die folgenden Arbeitsschritte umfasst:
(1) der MSC-Server sendet einen MOVE-Befehl an ein MGW_{MPTY} (103), um das MGW_{MPTY} (103) aufzufordern, ein Endgerät T_{A0} aus einem Zusammenhang C_{C} in einen Zusammenhang C_{MPTY} zu übertragen;
(2) der MSC-Server (101) sendet den Änderungsbefehl Modify an ein MGW_{MPTY} (103), um das MGW_{MPTY} (103) aufzufordern, die Aussendung eines Rufhaltetons an den externen Teilnehmer C einzustellen; und
(3) der externe Teilnehmer C wird benachrichtigt, dass der Anruf gehalten wurde, wobei andere externe Teilnehmer an der Konferenz mit mehreren Teilnehmern benachrichtigt werden, dass der gehaltene Anruf wiederhergestellt wurde, und gleichzeitig der absendende Teilnehmer benachrichtigt wird, dass der private Anruf mit dem Teilnehmer C gehalten wurde und deshalb die ursprünglich aufrechterhaltene Konferenz mit mehreren Teilnehmern wiederhergestellt wurde.

12. Verfahren nach Anspruch 1, welches des Weiteren einen Betriebsschritt zur Wiederherstellung einer Konferenz in dem Fall umfasst, in dem bei einer Konferenz mit mehreren Teilnehmern, wobei mindestens ein Teilnehmer A und ein Teilnehmer B an der Konferenz mit mehreren Teilnehmern beteiligt sind, die aufrechterhalten wird, ein privater Anruf vorliegt und gleichzeitig zwischen dem Teilnehmer A und einem Teilnehmer C ein aktiver Anruf vorliegt, und ein absendender Teilnehmer die Wiederherstellung der aufrechterhaltenen Konferenz mit mehreren Teilnehmern anfordert, und welches die folgenden Arbeitsschritte umfasst:
(1) der MSC-Server sendet einen MOVE-Befehl an das MGW (102), um das MGW (102) aufzufordern, ein Endgerät T_{A} aus einem Zusammenhang C_{AC} in einen Zusammenhang C_{A} zu übertragen;
(2) der MSC-Server (101) sendet einen Änderungsbefehl Modify an das MGW (102), um das MGW_{MPTY} (103) aufzufordern, den Rufhalteton an den externen Teilnehmer C zu senden; und
(3) der externe Teilnehmer C wird benachrichtigt, dass der Anruf gehalten wurde, wobei andere externe Teilnehmer an der Konferenz mit mehreren Teilnehmern benachrichtigt werden, dass der gehaltene Teilnehmer wiederhergestellt wurde, und gleichzeitig der absendende Teilnehmer benachrichtigt wird, dass der private Anruf mit dem Teilnehmer C gehalten wurde und deshalb die ursprünglich aufrechterhaltene Konferenz mit mehreren Teilnehmern wiederhergestellt wurde.

13. Verfahren nach Anspruch 1, welches des Weiteren einen Betriebsschritt zur Wiederherstellung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind und die Konferenz aufrechterhalten wird, kein privater Anruf vorliegt und ein absendender Teilnehmer die Wiederherstellung der Konferenz mit mehreren Teilnehmern anfordert, und welches die folgenden Arbeitsschritte umfasst:
(1) der MSC-Server sendet einen Änderungsbefehl Modify an ein MGW (102), um das MGW (102) aufzufordern, ein Endgerät T_{A} und andere Endgeräte bidirektional in einem Zusammenhang C_{A} zusammenzuschalten; und
(2) die externen Teilnehmer an der Konferenz mit mehreren Teilnehmern werden benachrichtigt, dass die Konferenz mit mehreren Teilnehmern wiederhergestellt wurde, und gleichzeitig wird der absendende Teilnehmer benachrichtigt, dass der Arbeitsgang zur Wiederherstellung der Konferenz mit mehreren Teilnehmern erfolgreich durchgeführt wurde.

14. Verfahren nach Anspruch 1, welches des Weiteren einen Betriebsschritt zur Wiederherstellung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind und die Konferenz aufrechterhalten wird, kein privater Anruf vorliegt und ein absendender Teilnehmer die Wiederherstellung der Konferenz mit mehreren Teilnehmern anfordert, und welches die folgenden Arbeitsschritte umfasst:
(1) der MSC-Server sendet einen Änderungsbefehl Modify an ein MGW_{MPTY} (103), um das MGW_{MPTY} (103) aufzufordern, ein Endgerät T_{A0} und andere Endgeräte bidirektional in einem Zusammenhang C_{MPTY} zusammenzuschalten; und
(2) die externen Teilnehmer an der Konferenz mit mehreren Teilnehmern werden benachrichtigt, dass die Konferenz mit mehreren Teilnehmern wiederhergestellt wurde, und gleichzeitig wird der absendende Teilnehmer benachrichtigt, dass der Arbeitsgang zur Wiederherstellung der Konferenz mit mehreren Teilnehmern erfolgreich durchgeführt wurde.

15. Verfahren nach Anspruch 1, welches des Weiteren einen Betriebsschritt zur Wiederherstellung einer Konferenz in dem Fall umfasst, in dem bei einer Konferenz mit mehreren Teilnehmern, wobei mindestens ein Teilnehmer A, ein Teilnehmer B und ein Teilnehmer C an der Konferenz mit mehreren Teilnehmern beteiligt sind und die Konferenz aufrechterhalten wird, kein privater Anruf vorliegt und ein absendender Teilnehmer die Wiederherstellung der Konferenz mit mehreren Teilnehmern anfordert, und welches die folgenden Arbeitsschritte umfasst:
(1) der MSC-Server sendet einen Änderungsbefehl Modify an ein MGW (102), um das MGW (102) aufzufordern, die Verbindung eines Endgeräts T_{A1} nach außen in einen Sende-/Empfangs-Zustand zu ändern; und
(2) die externen Teilnehmer an der Konferenz mit mehreren Teilnehmern werden benachrichtigt, dass die Konferenz mit mehreren Teilnehmern wiederhergestellt wurde, und gleichzeitig wird der absendende Teilnehmer benachrichtigt, dass der Arbeitsgang zur Wiederherstellung der Konferenz mit mehreren Teilnehmern erfolgreich durchgeführt wurde.

16. Verfahren nach Anspruch 1, welches des Weiteren einen Betriebsschritt zur Zuschaltung eines externen Teilnehmers in dem Fall umfasst, in dem ein MTPY für mehrere Teilnehmer bei einer Konferenz mit mehreren Teilnehmern sich in einem aktiven Zustand befindet, in dem ein privater Anruf zwischen einem Teilnehmer A und einem Teilnehmer C aufrechterhalten wurde, während die Konferenz mit mehreren Teilnehmern sich in einem aktiven Zustand befindet, und ein absendender Teilnehmer die Zuschaltung des privaten Anrufs zu der Konferenz mit mehreren Teilnehmern anfordert, und welches die folgenden Schritte umfasst:
(1) der MSC-Server sendet einen MOVE-Befehl, einschließlich des Befehls, die Aussendung eines Rufhaltetons an den externen Teilnehmer C zu beenden, an ein MGW_{MPTY} (103), um das MGW_{MPTY} (103) aufzufordern, ein Endgerät T_{C0} aus einem Zusammenhang C_{C} in einen Zusammenhang C_{MPTY} zu übertragen;
(2) der externe Teilnehmer C wird benachrichtigt, dass der gehaltene Anruf wiederhergestellt und zu der Konferenz mit mehreren Teilnehmern zugeschaltet wurde, wobei andere externe Teilnehmer an der Konferenz mit mehreren Teilnehmern benachrichtigt werden, dass ein neuer Teilnehmer zugeschaltet wurde, und gleichzeitig der absendende Teilnehmer benachrichtigt wird, dass der Vorgang zur Zuschaltung des privaten Anrufs zu der Konferenz mit mehreren Teilnehmern erfolgreich durchgeführt wurde.

17. Verfahren nach Anspruch 1, welches des Weiteren einen Betriebsschritt zur Zuschaltung eines externen Teilnehmers in dem Fall umfasst, in dem ein MTPY für mehrere Teilnehmer bei einer Konferenz mit mehreren Teilnehmern sich in einem aktiven Zustand befindet, in dem ein privater Anruf zwischen einem Teilnehmer A und einem Teilnehmer C aufrechterhalten wurde, während die Konferenz mit mehreren Teilnehmern sich in einem aktiven Zustand befindet, und ein absendender Teilnehmer die Zuschaltung des privaten Anrufs zu der Konferenz mit mehreren Teilnehmern anfordert, und welches die folgenden Schritte umfasst:
(1) der MSC-Server sendet einen Änderungsbefehl an ein MGW (102), um das MGW (102) aufzufordern, die Aussendung eines Rufhaltetons an den externen Teilnehmer C einzustellen;
(2) der MSC-Server (101) sendet einen Zuschaltbefehl ADD an ein MGW_{MPTY} (103), um das MGW_{MPTY} (103) aufzufordern, ein neues Endgerät T_{CO} in einen Zusammenhang C_{MPTY} zu bringen;
(3) der MSC-Server (101) sendet den Zuschaltbefehl ADD an das MGW (102), um das MGW (102) aufzufordern, ein neues Endgerät T_{C1} in einen Zusammenhang C_{AC} zu bringen; und
(4) der externe Teilnehmer C wird benachrichtigt, dass der gehaltene Anruf wiederhergestellt und zu der Konferenz mit mehreren Teilnehmern zugeschaltet wurde, wobei andere externe Teilnehmer an der Konferenz mit mehreren Teilnehmern benachrichtigt werden, dass ein neuer Teilnehmer zugeschaltet wurde, und gleichzeitig der absendende Teilnehmer benachrichtigt wird, dass der Vorgang zur Zuschaltung des privaten Anrufs zu der Konferenz mit mehreren Teilnehmern erfolgreich durchgeführt wurde.

18. Verfahren nach Anspruch 1, welches des Weiteren einen Betriebsschritt zur Zuschaltung eines externen Teilnehmers in dem Fall umfasst, in dem ein MTPY für mehrere Teilnehmer bei einer Konferenz mit mehreren Teilnehmern sich in einem aktiven Zustand befindet, in dem ein privater Anruf zwischen einem Teilnehmer A und einem Teilnehmer C besteht, während die Konferenz mit mehreren Teilnehmern aufrechterhalten wird, und ein absendender Teilnehmer die Zuschaltung des privaten Anrufs zu der Konferenz mit mehreren Teilnehmern anfordert, und welches die folgenden Schritte umfasst:
(1) der MSC-Server sendet einen MOVE-Befehl an ein MGW_{MPTY} (103), um das MGW_{MPTY} (103) aufzufordern, ein Endgerät T_{A0} aus einem Zusammenhang C_{C} in einen Zusammenhang C_{MPTY} zu übertragen;
(2) der MSC-Server (101) sendet den MOVE-Befehl an das MGW_{MPTY} (103), um das MGW_{MPTY} (103) aufzufordern, ein Endgerät T_{C0} aus dem Zusammenhang C_{C} in den Zusammenhang C_{MPTY} zu übertragen; und
(3) der externe Teilnehmer C wird benachrichtigt, dass der Anruf zu der Konferenz mit mehreren Teilnehmern zugeschaltet wurde, wobei andere externe Teilnehmer an der Konferenz mit mehreren Teilnehmern benachrichtigt werden, dass die Konferenz mit mehreren Teilnehmern wiederhergestellt und ein neuer Teilnehmer zugeschaltet wurde, und gleichzeitig der absendende Teilnehmer benachrichtigt wird, dass der Vorgang zur Zuschaltung des privaten Anrufs zu der Konferenz mit mehreren Teilnehmern erfolgreich durchgeführt wurde.

19. Verfahren nach Anspruch 1, welches des Weiteren einen Betriebsschritt zur Zuschaltung eines externen Teilnehmers in dem Fall umfasst, in dem ein MTPY für mehrere Teilnehmer bei einer Konferenz mit mehreren Teilnehmern sich in einem Aufrechterhaltungszustand befindet, in dem ein aktiver privater Anruf zwischen einem Teilnehmer A und einem Teilnehmer C besteht, während die Konferenz mit mehreren Teilnehmern aufrechterhalten wird, und ein absendender Teilnehmer die Zuschaltung des privaten Anrufs zu der Konferenz mit mehreren Teilnehmern anfordert, und welches die folgenden Schritte umfasst:
(1) der MSC-Server sendet einen MOVE-Befehl an das MGW (102), um das MGW (102) aufzufordern, ein Endgerät T_{A} aus einem Zusammenhang C_{AC} in einen Zusammenhang C_{A} zu übertragen;
(2) der MSC-Server (101) sendet einen Zuschaltbefehl ADD an ein MGW_{MPTY} (103), um das MGW_{MPTY} (103) aufzufordern, ein neues Endgerät T_{C0} in einen Zusammenhang C_{MPTY} zu schalten, nämlich das Gerät T_{C1};
(3) der MSC-Server (101) sendet den Zuschaltbefehl ADD an das MGW (102), um das MGW (102) zur Freigabe eines neuen Endgeräts in dem Zusammenhang C_{AC}, nämlich das Endgerät T_{C1}, aufzufordern; und
(4) der externe Teilnehmer C wird benachrichtigt, dass der Anruf zu der Konferenz mit mehreren Teilnehmern zugeschaltet wurde, wobei andere externe Teilnehmer an der Konferenz mit mehreren Teilnehmern benachrichtigt werden, dass die Konferenz mit mehreren Teilnehmern wiederhergestellt und ein neuer Teilnehmer zugeschaltet wurde, und gleichzeitig der absendende Teilnehmer benachrichtigt wird, dass der Vorgang zur Zuschaltung des privaten Anrufs zu der Konferenz mit mehreren Teilnehmern erfolgreich durchgeführt wurde.

## Revendications

1. Procédé de mise en oeuvre d'un service de téléconférence collective dans un réseau de télécommunication présentant une architecture de réseau MGN, **caractérisé en ce qu'**une passerelle multimédia d'appel de base, MGW (102) ne prend pas en charge un pont de téléconférence collective, et **en ce que** le procédé comprend une opération destinée à établir des services de téléconférence collective lorsqu'un appel entre un utilisateur A et un utilisateur B est maintenu, et un appel entre l'utilisateur A et un utilisateur C est dans un état actif, comprenant les étapes ci-dessous consistant à ou dans lesquelles:
(1) l'utilisateur A envoie un message de demande d'établissement de téléconférence collective à un serveur de centre MSC (101), en vue de demander l'établissement d'une téléconférence collective entre les utilisateurs A, B et C;
(2) le serveur de centre MSC (101) envoie une commande de modification «Modify» à la passerelle multimédia (102) en vue de lui demander d'arrêt d'envoyer une tonalité de maintien d'appel à l'utilisateur B distant;
(3) le serveur de centre MSC (101) envoie une commande de déplacement «Move» à la passerelle multimédia (102), en vue de demander à la passerelle multimédia (102) de modifier le contexte d'un terminal T_{A}, d'un contexte C_{AC} à un nouveau contexte, à savoir le contexte nouvellement établi C_{A};
(4) le serveur de centre MSC (101) envoie une commande d'ajout «ADD» à une passerelle multimédia (103) prenant en charge le pont de téléconférence collective, en vue de demander à une passerelle multimédia collective, MGW_{MPTY} (103) d'établir un nouveau contexte et un nouveau terminal, à savoir le contexte C_{MPTY} et le terminal T_{A0}; le serveur de centre MSC (101) envoie la commande d'ajout «ADD» à la passerelle multimédia (103) prenant en charge le pont de téléconférence collective en vue de demander à une passerelle MGW_{MPTY} (103) d'établir un nouveau terminal dans un contexte C_{MPTY}, à savoir le terminal T_{B0}; le serveur de centre MSC (101) envoie la commande d'ajout «ADD» à la passerelle multimédia (103) prenant en charge le pont de téléconférence collective en vue de demander à la passerelle MGW_{MPTY} (103) d'établir un nouveau terminal dans le contexte C_{MPTY}, à savoir le terminal T_{B0};
(5) le serveur de centre MSC (101) envoie la commande d'ajout «ADD» à la passerelle multimédia (102) en vue de demander à la passerelle multimédia (102) d'établir un nouveau terminal dans un contexte C_{A}, à savoir le terminal T_{A1};
(6) le serveur de centre MSC (101) envoie la commande d'ajout «ADD» à la passerelle multimédia (102) en vue de demander à la passerelle multimédia (102) d'établir un nouveau terminal dans un contexte C_{AB}, à savoir le terminal T_{B1};
(7) le serveur de centre MSC (101) envoie la commande d'ajout «ADD» à la passerelle multimédia (102) en vue de demander à la passerelle multimédia (102) d'établir un nouveau terminal dans un contexte C_{AC}, à savoir le terminal T_{C1}; et
(8) suite à l'accomplissement de l'opération de terminal, signaler à l'utilisateur B distant que l'appel maintenu a été restauré et ajouté à la téléconférence collective; signaler à l'utilisateur C distant que l'appel a été ajouté à la téléconférence collective; et signaler à l'utilisateur A que la téléconférence collective a été correctement établie.

2. Procédé selon la revendication 1, comprenant en outre une opération destinée à libérer des services de téléconférence collective lorsqu'au moins un utilisateur A, un utilisateur B et un utilisateur C mettent en oeuvre la téléconférence collective, et lorsqu'un utilisateur A répartiteur demande la libération de la téléconférence collective, comprenant les étapes ci-dessous dans lesquelles:
(1) l'utilisateur A et un serveur de centre MSC (101) accomplissent un processus de libération côté accès, et en même temps, signalent à des utilisateurs distants que l'appel a été libéré; après que l'utilisateur B distant libère le signal d'accomplissement et le transport, il renvoie une réponse de libération d'appel;
(2) le serveur de centre MSC (101) envoie une commande de soustraction «Subtract» à une passerelle MGW_{MPTY} (103) en vue de demander à la passerelle MGW_{MPTY} (103) de libérer un terminal T_{B0;}
(3) le serveur de centre MSC (101) envoie une commande de modification «Modify» à une passerelle MGW (102) en vue de signaler à la passerelle MGW (102) de modifier une direction de connexion d'un terminal T_{B1}, et en même temps, de libérer un transport connexe;
(4) le serveur de centre MSC (101) envoie la commande de soustraction «Subtract» à la passerelle MGW (102) en vue de demander à la passerelle MGW (102) de libérer le terminal T_{B1;}
(5) après que l'utilisateur B distant a libéré le signal d'accomplissement et le transport, il renvoie la réponse de libération d'appel;
(6) le serveur de centre MSC (101) envoie la commande de modification «Modify» à la passerelle MGW (102) en vue de signaler à la passerelle MGW (102) de modifier la direction de connexion d'un terminal T_{B}, et en même temps, de libérer le transport connexe;
(7) le serveur de centre MSC (101) envoie la commande de soustraction «Subtract» à la passerelle MGW (102) en vue de signaler à la passerelle MGW (102) de libérer le terminal T_{B1};
(8) l'utilisateur A et le serveur de centre MSC (101) accomplissent le processus de libération côté accès pour le dernier appel, libèrent une interface Iu, et en même temps, signalent aux utilisateurs distants que l'appel a été libéré;
(9) le serveur de centre MSC (101) envoie la commande de soustraction «Subtract» à la passerelle MGW (102) en vue de signaler à la passerelle MGW (102) de libérer un terminal T_{A};
(10) le serveur de centre MSC (101) envoie la commande de soustraction «Subtract» à la passerelle MGW_{MPTY} (103) en vue de demander à la passerelle MGW_{MPTY} (103) de libérer un terminal T_{A0;}
(11) le serveur de centre MSC (101) envoie la commande de modification «Modify» à la passerelle MGW (102) en vue de signaler à la passerelle MGW (102) de modifier la direction de connexion du terminal T_{A1}, et en même temps, de libérer le transport connexe;
(12) le serveur de centre MSC (101) envoie la commande de soustraction «Subtract» à la passerelle MGW (102) en vue de demander à la passerelle MGW (102) de libérer le terminal T_{A1};
(13) le serveur de centre MSC (101) envoie la commande de soustraction «Subtract» à la passerelle MGW_{MPTY} (103) en vue de demander à la passerelle MGW_{MPTY} (103) de libérer un terminal T_{C0};
(14) le serveur de centre MSC (101) envoie la commande de modification «Modify» à la passerelle MGW (102) en vue de signaler à la passerelle MGW (102) de modifier la direction de connexion d'un terminal T_{C1}, et en même temps, de libérer le transport connexe;
(15) le serveur de centre MSC (101) envoie la commande de soustraction «Subtract» à la passerelle MGW (102) en vue de demander à la passerelle MGW (102) de libérer le terminal T_{C1};
(16) après que l'utilisateur C distant a libéré le signal d'accomplissement et le transport, il renvoie la réponse de libération d'appel;
(17) le serveur de centre MSC (101) envoie la commande de modification «Modify» à la passerelle MGW (102) en vue de signaler à la passerelle MGW (102) de modifier la direction de connexion d'un terminal T_{C}, et en même temps, de libérer le transport connexe; et
(18) le serveur de centre MSC (101) envoie la commande de soustraction «Subtract» à la passerelle MGW (102) en vue de signaler à la passerelle MGW (102) de libérer le terminal T_{C}.

3. Procédé selon la revendication 1, comprenant en outre une opération destinée à libérer un appel unique d'une téléconférence collective lorsqu'au moins un utilisateur A, un utilisateur B et un utilisateur C mettent en oeuvre la téléconférence collective, et lorsque l'utilisateur B distant signale que l'appel a été libéré, comprenant les étapes ci-dessous consistant à ou dans lesquelles:
(1) le serveur de centre MSC (101) met en oeuvre un processus de libération avec un côté accès d'utilisateur;
(2) le serveur de centre MSC (101) envoie une commande de soustraction «Subtract» à une passerelle MGW_{MPTY} (103) en vue de demander à la passerelle MGW_{MPTY} (103) de libérer un terminal T_{C0};
(3) le serveur de centre MSC (101) envoie une commande de modification «Modify» à une passerelle MGW (102) en vue de signaler à la passerelle MGW (102) de modifier une direction de connexion d'un terminal T_{C1}, et en même temps, de libérer un transport connexe;
(4) le serveur de centre MSC (101) envoie la commande de soustraction «Subtract» à la passerelle MGW (102) en vue de demander à la passerelle MGW (102) de libérer le terminal T_{C1};
(5) le serveur de centre MSC (101) envoie la commande de modification «Modify» à la passerelle MGW (102) en vue de signaler à la passerelle MGW (102) de modifier la direction de connexion du terminal T_{C1}, et en même temps, de libérer le transport connexe;
(6) le serveur de centre MSC (101) envoie la commande de soustraction «Subtract» à la passerelle MGW (102) en vue de signaler à la passerelle MGW (102) de libérer le terminal T_{C}; et
(7) signaler aux utilisateurs distants que l'appel d'un côté local est libéré.

4. Procédé selon la revendication 1, comprenant en outre une opération destinée à séparer un utilisateur distant d'une téléconférence collective lorsqu'au moins un utilisateur A, un utilisateur B et un utilisateur C mettent en oeuvre la téléconférence collective, et lorsque l'utilisateur A répartiteur demande la séparation de l'utilisateur C distant et met en oeuvre une conversion privée avec l'utilisateur C, tandis que d'autres utilisateurs dans la téléconférence collective peuvent poursuivre la conversion, comprenant les étapes ci-dessous consistant à ou dans lesquelles:
(1) le serveur de centre MSC (101) envoie une commande de déplacement «MOVE» à une passerelle MGW_{MPTY} (103) en vue de demander à la passerelle MGW_{MPTY} (103) de transférer un terminal T_{C0} vers un nouveau contexte, et une passerelle MGW (102) renvoie des réponses incluant le contexte nouvellement appliqué C_{C};
(2) le serveur de centre MSC (101) envoie la commande de déplacement «MOVE» à la passerelle MGW_{MPTY} (103) en vue de demander à la passerelle MGW_{MPTY} (103) de transférer un terminal T_{A0} vers le contexte C_{C}; et
(3) signaler à l'utilisateur C distant que l'appel a été séparé, signaler à d'autres utilisateurs distants dans la téléconférence collective que la téléconférence collective a été maintenue, et signaler à l'utilisateur A que l'opération de séparation a été accomplie correctement.

5. Procédé selon la revendication 1, comprenant en outre une opération destinée à séparer un utilisateur distant d'une téléconférence collective lorsqu'au moins un utilisateur A, un utilisateur B et un utilisateur C mettent en oeuvre la téléconférence collective, et lorsque l'utilisateur A répartiteur demande la séparation de l'utilisateur C distant et met en oeuvre une conversion privée avec l'utilisateur C, tandis que d'autres utilisateurs dans la téléconférence collective peuvent poursuivre la conversion, comprenant les étapes ci-dessous consistant à ou dans lesquelles:
(1) le serveur de centre MSC (101) envoie une commande de soustraction «Subtract» à une passerelle MGW_{MPTY} (103) en vue de demander à la passerelle MGW_{MPTY} (103) de libérer un terminal T_{C0};
(2) le serveur de centre MSC (101) envoie une commande de modification «Modify» à une passerelle MGW (102) en vue de signaler à la passerelle MGW (102) de modifier une direction de connexion d'un terminal T_{C1}, et en même temps, de libérer le transport connexe;
(3) le serveur de centre MSC (101) envoie la commande de soustraction «Subtract» à la passerelle MGW (102) en vue de demander à la passerelle MGW (102) de libérer le terminal T_{C1};
(4) le serveur de centre MSC (101) envoie une commande de déplacement «MOVE» à la passerelle MGW (102) en vue de demander à la passerelle MGW (102) de transférer un terminal T_{A0} vers un contexte C_{AC}; et
(5) signaler à l'utilisateur C distant que l'appel a été séparé, signaler à d'autres utilisateurs distants dans la téléconférence collective que la téléconférence collective a été maintenue, et signaler à l'utilisateur A que l'opération de séparation a été accomplie correctement.

6. Procédé selon la revendication 1, comprenant en outre une opération destinée à maintenir une téléconférence lorsqu'il existe un appel privé dans une téléconférence collective, dans lequel au moins un utilisateur A, un utilisateur B et un utilisateur C mettent en oeuvre la téléconférence collective, lorsque l'utilisateur A et l'utilisateur B mettent en oeuvre la téléconférence collective, tandis que l'appel entre l'utilisateur A et l'utilisateur C est maintenu, comprenant les étapes ci-dessous consistant à ou dans lesquelles:
(1) le serveur de centre MSC (101) envoie une commande de modification «Modify» à une passerelle MGW_{MPTY} (103) en vue de signaler à la passerelle MGW_{MPTY} (103) d'arrêter d'envoyer une tonalité de maintien d'appel à l'utilisateur C distant;
(2) le serveur de centre MSC (101) envoie une commande de déplacement «MOVE» à la passerelle MGW_{MPTY} (103) en vue de signaler à la passerelle MGW (102) de transférer un terminal T_{A0}, d'un contexte C_{MPTY} vers un contexte C_{C}; et
(3) signaler à l'utilisateur C distant que l'appel maintenu a été restauré, signaler à d'autres utilisateurs distants dans la téléconférence collective que la téléconférence collective a été maintenue, et en même temps, signaler à l'utilisateur répartiteur que l'appel maintenu a été restauré, et que par conséquent la téléconférence collective a été maintenue.

7. Procédé selon la revendication 1, comprenant en outre une opération destinée à maintenir une téléconférence lorsqu'il existe un appel privé dans une téléconférence collective, dans lequel au moins un utilisateur A, un utilisateur B et un utilisateur C mettent en oeuvre la téléconférence collective, lorsque l'utilisateur A et un utilisateur B mettent en oeuvre la téléconférence collective, tandis que l'appel entre l'utilisateur A et l'utilisateur C est maintenu, comprenant les étapes ci-dessous consistant à ou dans lesquelles:
(1) le serveur de centre MSC (101) envoie une commande de modification «Modify» à une passerelle MGW (102) en vue de signaler à la passerelle MGW (102) d'arrêter d'envoyer une tonalité de maintien d'appel à l'utilisateur C distant;
(2) le serveur de centre MSC (101) envoie une commande de déplacement «MOVE» à la passerelle MGW (102) en vue de signaler à la passerelle MGW (102) de transférer un terminal T_{A}, d'un contexte C_{A} vers un contexte C_{AC}; et
(3) signaler à l'utilisateur C distant que l'appel maintenu a été restauré, signaler aux utilisateurs distants dans la téléconférence collective que la téléconférence collective a été maintenue, et en même temps, signaler à l'utilisateur répartiteur que l'appel maintenu a été restauré, et que par conséquent la téléconférence collective a été maintenue.

8. Procédé selon la revendication 1, comprenant en outre une opération destinée à maintenir une téléconférence lorsqu'il n'existe aucun appel privé dans une téléconférence collective, dans lequel au moins un utilisateur A, un utilisateur B et un utilisateur C mettent en oeuvre la téléconférence collective, et un utilisateur A répartiteur demande le maintien de la téléconférence collective, comprenant les étapes ci-dessous consistant à ou dans lesquelles:
(1) le serveur de centre MSC (101) envoie une commande de modification «Modify» à une passerelle MGW (102) en vue de demander à la passerelle MGW (102) d'isoler un terminal T_{A} et d'autres terminaux dans un contexte C_{A}; et
(2) signaler aux utilisateurs distants de la téléconférence collective que la téléconférence collective a été maintenue, et en même temps, signaler à l'utilisateur répartiteur que l'opération de maintien de la téléconférence collective a été mise en oeuvre correctement.

9. Procédé selon la revendication 1, comprenant en outre une opération destinée à maintenir une téléconférence lorsqu'il n'existe aucun appel privé dans une téléconférence collective, dans lequel au moins un utilisateur A, un utilisateur B et un utilisateur C mettent en oeuvre la téléconférence collective, et un utilisateur A répartiteur demande le maintien de la téléconférence collective, comprenant les étapes ci-dessous consistant à ou dans lesquelles:
(1) le serveur de centre MSC (101) envoie une commande de modification «Modify» à la passerelle MGW (102) en vue de demander à la passerelle MGW (102) d'isoler un terminal T_{A0} et d'autres terminaux dans un contexte C_{MPTY}; et
(2) signaler aux utilisateurs distants de la téléconférence collective que la téléconférence collective a été maintenue, et en même temps, signaler à l'utilisateur répartiteur que l'opération de maintien de la téléconférence collective a été mise en oeuvre correctement.

10. Procédé selon la revendication 1, comprenant en outre une opération destinée à maintenir une téléconférence lorsqu'il n'existe aucun appel privé dans une téléconférence collective, dans lequel au moins un utilisateur A, un utilisateur B et un utilisateur C mettent en oeuvre la téléconférence collective, et un utilisateur A répartiteur demande le maintien de la téléconférence collective, comprenant les étapes ci-dessous consistant à ou dans lesquelles:
(1) le serveur de centre MSC (101) envoie une commande de modification «Modify» à une passerelle MGW (102) en vue de demander à la passerelle MGW (102) de modifier une connexion extérieure d'un terminal T_{A1} dans un état inactif; et
(2) signaler aux utilisateurs distants de la téléconférence collective que la téléconférence collective a été maintenue, et en même temps, signaler à l'utilisateur répartiteur que l'opération de maintien de la téléconférence collective a été mise en oeuvre correctement.

11. Procédé selon la revendication 1, comprenant en outre une opération destinée à restaurer une téléconférence lorsqu'il existe un appel privé dans une téléconférence collective, dans lequel un utilisateur A et un utilisateur B mettent en oeuvre la téléconférence collective qui est maintenue, et en même temps, il existe un appel actif entre l'utilisateur A et un utilisateur C, et un utilisateur répartiteur demande la restauration de la téléconférence collective maintenue, comprenant les étapes ci-dessous consistant à ou dans lesquelles:
(1) le serveur de centre MSC (101) envoie une commande de déplacement «MOVE» à une passerelle MGW_{M}p_{TY} (103) en vue de demander à la passerelle MGW_{MPTY} (103) de transférer un terminal T_{A0}, d'un contexte C_{C} vers un contexte C_{MPTY};
(2) le serveur de centre MSC (101) envoie la commande de modification «Modify» à une passerelle MGW_{MPTY} (103) en vue de demander à la passerelle MGW_{MPTY} (103) d'envoyer une tonalité de maintien d'appel à l'utilisateur C distant; et
(3) signaler à l'utilisateur C distant que l'appel a été maintenu, signaler à d'autres utilisateurs distants dans la téléconférence collective que l'appel maintenu a été restauré, et en même temps, signaler à l'utilisateur répartiteur que l'appel privé avec l'utilisateur C a été maintenu, et que par conséquent, la téléconférence collective initialement maintenue a été restaurée.

12. Procédé selon la revendication 1, comprenant en outre une opération destinée à restaurer une téléconférence lorsqu'il existe un appel privé dans une téléconférence collective, dans lequel un utilisateur A et un utilisateur B mettent en oeuvre la téléconférence collective qui est maintenue, et en même temps, il existe un appel actif entre l'utilisateur A et un utilisateur C, et un utilisateur répartiteur demande la restauration de la téléconférence collective maintenue, comprenant les étapes ci-dessous consistant à ou dans lesquelles:
(1) le serveur de centre MSC (101) envoie une commande de déplacement «MOVE» à une passerelle MGW (102) en vue de demander à la passerelle MGW (102) de transférer un terminal T_{A} d'un contexte C_{AC} vers un contexte C_{A};
(2) le serveur de centre MSC (101) envoie une commande de modification «Modify» à la passerelle MGW (102) en vue de demander à la passerelle MGW (102) d'envoyer une tonalité de maintien d'appel à l'utilisateur C distant; et
(3) signaler à l'utilisateur C distant que l'appel a été maintenu, signaler à d'autres utilisateurs distants dans la téléconférence collective que l'utilisateur maintenu a été restauré, et en même temps, signaler à l'utilisateur répartiteur que l'appel privé avec l'utilisateur C a été maintenu, et que par conséquent, la téléconférence collective initialement maintenue a été restaurée.

13. Procédé selon la revendication 1, comprenant en outre une opération destinée à restaurer une téléconférence lorsqu'il n'existe aucun appel privé dans une téléconférence collective, dans lequel la téléconférence collective entre un utilisateur A, un utilisateur B et un utilisateur C a été maintenue, et un utilisateur répartiteur demande la restauration de la téléconférence collective, comprenant les étapes ci-dessous consistant à ou dans lesquelles:
(1) le serveur de centre MSC (101) envoie une commande de modification «Modify» à une passerelle MGW (102) en vue de demander à la passerelle MGW (102) de connecter un terminal T_{A} et d'autres terminaux dans un contexte C_{A} de manière bidirectionnelle; et
(2) signaler aux utilisateurs distants de la téléconférence collective que la téléconférence collective a été restaurée, et en même temps, signaler à l'utilisateur répartiteur que l'opération de restauration de la téléconférence collective a été mise en oeuvre correctement.

14. Procédé selon la revendication 1, comprenant en outre une opération destinée à restaurer une téléconférence lorsqu'il n'existe aucun appel privé dans une téléconférence collective, dans lequel la téléconférence collective entre un utilisateur A, un utilisateur B et un utilisateur C a été maintenue, et un utilisateur répartiteur demande la restauration de la téléconférence collective, comprenant les étapes ci-dessous consistant à ou dans lesquelles:
(1) le serveur de centre MSC (101) envoie une commande de modification «Modify» à une passerelle MGW_{MPTY} (103) en vue de demander à la passerelle MGW_{MPTY} (103) de connecter un terminal T_{A0} et d'autres terminaux dans un contexte C_{MPTY} de manière bidirectionnelle; et
(2) signaler aux utilisateurs distants de la téléconférence collective que la téléconférence collective a été restaurée, et en même temps, signaler à l'utilisateur répartiteur que l'opération de restauration de la téléconférence collective a été mise en oeuvre correctement.

15. Procédé selon la revendication 1, comprenant en outre une opération destinée à restaurer une téléconférence lorsqu'il n'existe aucun appel privé dans une téléconférence collective, dans lequel la téléconférence collective entre un utilisateur A, un utilisateur B et un utilisateur C a été maintenue, et un utilisateur répartiteur demande la restauration de la téléconférence collective, comprenant les étapes ci-dessous consistant à ou dans lesquelles:
(1) le serveur de centre MSC (101) envoie une commande de modification «Modify» à une passerelle MGW (102) en vue de demander à la passerelle MGW (102) de modifier une connexion extérieure d'un terminal T_{A1} dans un état d'émission / réception; et
(2) signaler aux utilisateurs distants de la téléconférence collective que la téléconférence collective a été restaurée, et en même temps, signaler à l'utilisateur répartiteur que l'opération de restauration de la téléconférence collective a été mise en oeuvre correctement.

16. Procédé selon la revendication 1, comprenant en outre une opération destinée à ajouter un utilisateur distant lorsqu'une partie collective MTPY dans une téléconférence collective est dans un état actif, dans lequel un appel privé entre un utilisateur A et un utilisateur C a été maintenu, tandis que la téléconférence collective est dans un état actif, et un utilisateur répartiteur demande d'ajouter l'appel privé à la téléconférence collective, comprenant les étapes ci-dessous consistant à ou dans lesquelles:
(1) le serveur de centre MSC (101) envoie une commande de déplacement «MOVE», incluant l'arrêt de l'envoi d'une tonalité de maintien d'appel à l'utilisateur C distant, à une passerelle MGW_{MPTY} (103), en vue de demander à la passerelle MGW_{MPTY} (103) de transférer un terminal T_{C0}, d'un contexte C_{C} à un contexte C_{MPTY}; et
(2) signaler à l'utilisateur C distant que l'appel maintenu a été restauré et ajouté à la téléconférence collective, signaler à d'autres utilisateurs distants dans la téléconférence collective qu'un nouvel utilisateur a été ajouté, et en même temps, signaler à l'utilisateur répartiteur que l'opération destinée à ajouter l'appel privé à la présente téléconférence collective a été mise en oeuvre correctement.

17. Procédé selon la revendication 1, comprenant en outre une opération destinée à ajouter un utilisateur distant lorsqu'une partie collective MTPY dans une téléconférence collective est dans un état actif, dans lequel un appel privé entre un utilisateur A et un utilisateur C a été maintenu, tandis que la téléconférence collective est dans un état actif, et un utilisateur répartiteur demande d'ajouter l'appel privé à la téléconférence collective, comprenant les étapes ci-dessous consistant à ou dans lesquelles:
(1) le serveur de centre MSC (101) envoie une commande de modification «Modify» à une passerelle MGW (102) en vue de demander à la passerelle MGW (102) d'arrêter d'envoyer une tonalité de maintien d'appel à l'utilisateur C distant;
(2) le serveur de centre MSC (101) envoie une commande d'ajout «ADD» à une passerelle MGW_{MPTY} (103) en vue de demander à la passerelle MGW_{MPTY} (103) d'appliquer un nouveau terminal T_{C0} dans un contexte C_{MPTY};
(3) le serveur de centre MSC (101) envoie la commande d'ajout «ADD» à la passerelle MGW (102) en vue de demander à la passerelle MGW (102) d'appliquer un nouveau terminal T_{C1} dans un contexte C_{AC}; et
(4) signaler à l'utilisateur C distant que l'appel maintenu a été restauré et ajouté à la téléconférence collective, signaler à d'autres utilisateurs distants dans la téléconférence collective qu'un nouvel utilisateur a été ajouté à la conférence, et en même temps, signaler à l'utilisateur répartiteur que l'opération d'ajout de l'appel privé à la téléconférence collective a été mise en oeuvre correctement.

18. Procédé selon la revendication 1, comprenant en outre une opération destinée à ajouter un utilisateur distant lorsqu'une partie collective MTPY dans une téléconférence collective est dans un état de maintien, dans lequel il existe un appel privé actif entre un utilisateur A et un utilisateur C, tandis que la téléconférence collective est maintenue, et un utilisateur répartiteur demande d'ajouter l'appel privé à la téléconférence collective, comprenant les étapes ci-dessous consistant à ou dans lesquelles:
(1) le serveur de centre MSC (101) envoie une commande de déplacement «MOVE» à une passerelle MGW_{MPTY} (103) en vue de demander à la passerelle MGW_{MPTY} (103) de transférer un terminal T_{A0}, d'un contexte C_{C} vers un contexte C_{MPTY};
(2) le serveur de centre MSC (101) envoie la commande de déplacement «MOVE» à la passerelle MGW_{MPTY} (103) en vue de demander à la passerelle MGW_{MPTY} (103) de transférer un terminal T_{C0}, du contexte C_{C} vers le contexte C_{MPTY}; et
(3) signaler à l'utilisateur C distant que l'appel a été ajouté à la téléconférence collective, signaler à d'autres utilisateurs distants dans la téléconférence collective que la téléconférence collective a été restaurée, et qu'un nouvel utilisateur a été ajouté à la téléconférence collective, et en même temps, signaler à l'utilisateur répartiteur que l'opération d'ajout de l'appel privé à la téléconférence collective a été mise en oeuvre correctement.

19. Procédé selon la revendication 1, comprenant en outre une opération destinée à ajouter un utilisateur distant lorsqu'une partie collective MTPY dans une téléconférence collective est dans un état de maintien, dans lequel il existe un appel privé actif entre un utilisateur A et un utilisateur C, tandis que la téléconférence collective est maintenue, et un utilisateur répartiteur demande d'ajouter l'appel privé à la téléconférence collective, comprenant les étapes ci-dessous consistant à ou dans lesquelles:
(1) le serveur de centre MSC (101) envoie une commande de déplacement «MOVE» à une passerelle MGW (102) en vue de demander à la passerelle MGW (102) de transférer un terminal T_{A}, d'un contexte C_{AC} vers un contexte C_{A};
(2) le serveur de centre MSC (101) envoie une commande d'ajout «ADD» à une passerelle MGW_{MPTY} (103) en vue de demander à la passerelle MGW_{MPTY} (103) d'ajouter un nouveau terminal dans un contexte C_{MPTY}, à savoir le terminal T_{C0};
(3) le serveur de centre MSC (101) envoie la commande d'ajout «ADD» à la passerelle MGW (102) en vue de demander à la passerelle MGW (102) d'ajouter un nouveau terminal dans le contexte C_{AC}, à savoir le terminal T_{C1}; et
(4) signaler à l'utilisateur C distant que l'appel a été ajouté à la téléconférence collective, signaler à d'autres utilisateurs distants dans la téléconférence collective que la téléconférence collective a été restaurée, et qu'un nouvel utilisateur a été ajouté à la téléconférence collective, et en même temps, signaler à l'utilisateur répartiteur que l'opération d'ajout de l'appel privé à la téléconférence collective a été mise en oeuvre correctement.
